# EUROPÄISCHE PATENTSCHRIFT

(11) **EP 3 975 966 B1**
(45) Veröffentlichungstag und Bekanntmachung des Hinweises auf die Patenterteilung: **06.09.2023**
(21) Anmeldenummer: 20730992.3
(22) Anmeldetag: 25.05.2020
(51) Int. Cl.: A61G 5/10, B62B 5/04, B62B 9/08, A61H 3/04

(54) **VORRICHTUNG ZUM BREMSEN EINER ROTATIONSBEWEGUNG EINES ROTATIONSELEMENTES UND ROLLVORRICHTUNG**
DEVICE FOR BRAKING A ROTATIONAL MOVEMENT OF A ROTATION ELEMENT, AND ROLLING DEVICE
DISPOSITIF DESTINÉ À FREINER UN MOUVEMENT DE ROTATION D'UN ÉLÉMENT DE ROTATION ET DISPOSITIF ROULANT

(30) Priorität: 24.05.2019 DE 102019114030
(43) Veröffentlichungstag der Anmeldung: 06.04.2022
(73) Patentinhaber: Betterguards Technology GmbH, 10625 Berlin (DE)
(72) Erfinder: BICHLER, Vinzenz, 10777 Berlin (DE); STUMPER, Timo, 10963 Berlin (DE)
(74) Vertreter: Okoampah, Rene
(86) Internationale Anmeldenummer: PCT/EP2020/064460
(87) Internationale Veröffentlichungsnummer: WO 2020/239705

(56) Entgegenhaltungen:
- WO-A2-2012/091442
- US-A1- 2008 142 315
- US-A1- 2017 291 626

## Beschreibung

### Technisches Gebiet

Die vorliegende Erfindung betrifft eine Vorrichtung zum Bremsen einer Rotationsbewegung eines Rotationselementes, beispielsweise eines Rades, etwa an einem Rollator, Gehwagen, Kinderwagen, Rollstuhl, Lauflernwagen, Lauffahrrad oder Spielgerät, und eine Rollvorrichtung, beispielsweise ein Rollator, ein Gehwagen, ein Kinderwagen, ein Rollstuhl, ein Lauflernwagen, ein Lauffahrrad, ein Spielgerät, ein Fahrradanhänger, eine Schubkarre, insbesondere eine Schubkarre für den Bau, ein Servierwagen, insbesondere für Flugzeug, Bahn oder Schiff, ein Gepäckwagen, eine Roll-Hundeleine oder eine Aufrollvorrichtung beim Segeln.

### Stand der Technik

Es ist bestens bekannt, Rotationselemente als technische Mittel zum Erreichen eines gewünschten Ergebnisses einzusetzen, beispielsweise als Rad an einem Wagen oder Gefährt zum Fortbewegen, oder etwa in der Energiegewinnung, beispielsweise in Form eines Laufrades einer Turbine oder als Rotor einer Windkraftanlage. Als Rotationselement wird vorwiegend ein Körper verstanden, der rotieren kann beziehungsweise in Rotation versetzt werden kann.

So vorteilhaft der Einsatz von Rotationselementen in der Technik sein kann, birgt er auch gewisse Risiken, insbesondere wenn für das Rotationselement kein Sicherungsmechanismus, wie etwa eine Bremse zum Verringern und/oder Begrenzen der Rotationsgeschwindigkeit des Rotationselements vorhanden ist. Eine zu schnelle Rotationsgeschwindigkeit kann zu Schäden an der das Rotationselement aufweisenden technischen Einrichtung führen, beispielsweise bei Windkraftanlagen. Zudem kann ein ungebremstes Rotieren eine Gefahr für Personen, die mit einer das Rotationselement aufweisenden technischen Vorrichtung interagieren, hervorrufen, insbesondere, wenn es sich um das Rotationselement um ein ungebremstes Rad handelt. Beispielsweise kann ein mit einem Lauffahrrad oder einem Lauflernwagen interagierendes Kind durch die fehlende Bremsmöglichkeit bei zu hoher Geschwindigkeit des Gefährts die Kontrolle über selbiges verlieren und sich verletzen.

Das Vorstehende gilt insbesondere für Rollvorrichtungen, wie beispielsweise Rollatoren, Gehwägen, Kinderwägen, Rollstuhl, Lauflernwägen, Lauffahrräder oder Spielgeräte, sowie Fahrradanhänger, Schubkarren, insbesondere Schubkarren für den Bau, Servierwägen, insbesondere für Flugzeug, Bahn oder Schiff, und Gepäckwägen,. Bei diesen Vorrichtungen stützt sich häufig die die Rollvorrichtung benutzende Person zumindest mit einem Teil seines Körpergewichts auf dieser ab und/oder nutzt die Rollvorrichtung, um das Gleichgewicht zu halten. So ermöglichen beispielsweise Rollatoren oder Gehwägen Personen mit beeinträchtigtem Gehvermögen, sich in einem vergrößerten Bewegungsradius fortzubewegen, was oftmals erlaubt, der Person weiterhin eine im Wesentlichen selbstbestimmte Teilnahme am täglichen Leben zu ermöglichen. Fahrbare Gehhilfen wie Rollatoren und Gehwägen werden hierbei oftmals von älteren Personen genutzt, welche grundsätzlich körperlich beeinträchtig sind, etwa eine verminderte Reaktionsfähigkeit und Kraft sowie Kraftausdauer aufweisen. Zwar weisen die meisten Rollatoren und Gehwägen von Hand betätigbare Bremsen ähnliche jenen von Fahrrädern auf, bei welchen ein aktives Anziehen eines Bremshebels eine entsprechende Bremskraft auf zumindest ein Rad des Rollators bewirkt. Dies setzt jedoch voraus, dass die den Rollator nutzende Person, um ein versehentliches Losrollen oder Wegrollen zu verhindern, das Bremsen aktiv auslöst.

Bei einem Stolpern der den Rollator führenden Person, etwa über einen Stein oder einen Teppichsaum, oder einem Wegschwenken des Rollators aufgrund eines unbeabsichtigt auf den Rollator aufgebrachten Impuls, ist die den Rollator führende Person oft nicht in der Lage, durch ein gewolltes, aktives Bremsen einem Fortbewegen des Rollators vom Schwerpunkt der Person zu verhindern. Aus diesem Grunde kommt es immer wieder zu Stürzen von Rollatoren nutzenden Personen.

Selbiges gilt für Spielgeräte, Lauflernwägen oder Lauffahrräder, bei welchen bewusst keine aktive Bremse vorgesehen ist, da die die vorgenannten Rollvorrichtungen nutzenden Kinder in der Regel noch nicht dazu fähig sind, situationsgerecht stets ein wohldossiertes aktives Bremsen auszulösen. Vielmehr stellt eine aktive Bremse für solche Rollvorrichtungen ein erhebliches Verletzungsrisiko für das Kind aufgrund eines durch das Kind erzeugten, unkontrollierten Bremsbefehls dar.

Die Druckschriften US 2008/142315 A1, WO 2012/091442 A2 und US 2017/291626 A1 offenbaren Vorrichtungen zum Bremsen der Rotationsbewegung eines eines Rades.

### Darstellung der Erfindung

Ausgehend von dem bekannten Stand der Technik ist es eine Aufgabe der vorliegenden Erfindung, eine Vorrichtung zum Bremsen einer Rotationsbewegung eines Rotationselements, bevorzugt eines Rades, besonders bevorzugt eines Rades an einer Rollvorrichtung, bevorzugt einem Rollator, Gehwagen, Kinderwagen, Rollstuhl, Lauflernwagen, Lauffahrrad oder Spielgerät, ein Fahrradanhänger, eine Schubkarre, insbesondere eine Schubkarre für den Bau, ein Servierwagen, insbesondere für Flugzeug Bahn oder Schiff, eine Roll-Hundeleine, oder eine Aufrollvorrichtung beim Segeln, welche zumindest einem der vorstehenden Nachteile Rechnung trägt, sowie eine verbesserte Rollvorrichtung bereitzustellen.

Die Aufgabe wird durch eine Vorrichtung zum Bremsen einer Rotationsbewegung eines Rotationselements, bevorzugt eines Rades, besonders bevorzugt eines Rades an einer Rollvorrichtung, bevorzugt einem Rollator, Gehwagen, Kinderwagen, Rollstuhl, Lauflernwagen, Lauffahrrad oder Spielgerät mit den Merkmalen des Anspruchs 1 gelöst. Vorteilhafte Weiterbildungen ergeben sich aus den Unteransprüchen, der Beschreibung und den Figuren.

Entsprechend wird eine Vorrichtung zum Bremsen einer Rotationsbewegung eines Rotationselements, bevorzugt eines Rades, besonders bevorzugt eines Rades an einer Rollvorrichtung, bevorzugt einem Rollator, Gehwagen, Kinderwagen, Rollstuhl, Lauflernwagen, Lauffahrrad oder Spielgerät, vorgeschlagen, umfassend ein Trägerelement zum Abstützen gegen eine Achse eines Rotationselements oder einen das Rotationselement tragenden Trägerrahmen, ein um eine Drehachse relativ zum Trägerelement drehbares Stützelement zum kraftübertragenden Anbinden an das Rotationselement, und ein sich zwischen dem Trägerelement und dem Stützelement erstreckendes Dämpfungselement, wobei das Dämpfungselement dazu eingerichtet ist, eine einer Längenänderung des Dämpfungselements entgegengerichteten Dämpfungskraft bereitzustellen, deren Höhe abhängig ist von der Geschwindigkeit der Längenänderung, wobei eine erste Seite des Dämpfungselements derart an dem Trägerelement gelagert ist und eine relativ zur ersten Seite längsverschiebbare zweite Seite des Dämpfungselements derart an dem Stützelement gelagert ist, dass eine Drehung des Stützelements um die Drehachse zumindest in einem vorgegebenen Winkelabschnitt in Umfangsrichtung bezogen auf die Drehachse eine Längenänderung des Dämpfungselements bewirkt, und eine im Dämpfungselement erzeugte Dämpfungskraft ein Bremsen der Drehung des Stützelements bewirkt.

Dadurch ist es möglich, eine auf das Rotationselement wirkende Bremskraft bereitzustellen, welche entgegen der Rotationsrichtung des rotierenden Rotationselements gerichtet ist und somit ein Abbremsen beziehungsweise Verlangsamen des Rotationselements bewirkt, wobei die Höhe der Bremskraft geschwindigkeitsabhängig ist. Die Geschwindigkeit der Längenänderung des Dämpfungselements ist hierbei proportional zur Drehgeschwindigkeit des Rotationselements. Je schneller das Rotationselement dreht, desto schneller wird auch das Dämpfungselement expandiert oder komprimiert, wobei das Dämpfungselement bei einer vollständigen Umdrehung sowohl eine Expansion als auch eine Kompression erfährt. Da die Dämpfungskraft abhängig ist von der Geschwindigkeit der Längenänderung, steht bei höherer Dreh- beziehungsweise Rotationsgeschwindigkeit des Rotationselements entsprechend eine höhere Dämpfungskraft bereit. Da die Dämpfungskraft Grundlage für die auf das Rotationselement einwirkende resultierende Bremswirkung beziehungsweise Bremskraft ist, ist letztere ebenso abhängig von der Drehgeschwindigkeit oder synonym ausgedrückt Rotationsgeschwindigkeit des Rotationselements. Vorzugsweise ist die Abhängigkeit der Dämpfungskraft nicht linear zur Zunahme der Rotationsgeschwindigkeit.

Durch die Vorrichtung ist es folglich möglich, für das Rotationselement eine Bremswirkung bereitzustellen, welche nicht aktiv durch eine Person ausgelöst werden muss, sondern vielmehr passiv in Abhängigkeit von der Drehgeschwindigkeit des Rotationselements wirkt. So kann das Rotationselement bei vergleichsweise niedrigen Drehgeschwindigkeiten je nach Ausgestaltung des Dämpfungselements ein entsprechend im Wesentlichen vernachlässigbar kleines oder sogar kein merkliches Bremsen erfahren und bei vergleichsweise hohen Drehgeschwindigkeiten ein signifikantes Bremsen erfahren.

Bei Rollvorrichtungen ist die Drehgeschwindigkeit der Räder abhängig von der Rollgeschwindigkeit der Rollvorrichtung. Eine mit der Vorrichtung ausgestattete Rollvorrichtung, bei welcher die Vorrichtung auf mindestens ein Rad der Rollvorrichtung wirkt, beispielsweise ein Rollator, bei welchem die Vorrichtung auf beide Hinterräder wirkt, kann so bei relativ langsamen Bewegungen, etwa einem Vorwärtsbewegen der Person mit dem Rollator in üblicher Geh-Geschwindigkeit, aufgrund der geringen oder unmerklichen Bremsung der Räder leichtgängig erfolgen. Mit anderen Worten stellt die Vorrichtung dann keinen oder nur einen unmerklichen Drehwiderstand für die Räder bereit. Steigt die Geschwindigkeit abrupt, etwa aufgrund eines Stolperns der den Rollator verwendenden Person, so kann die Vorrichtung aufgrund der entsprechend erhöhten Drehgeschwindigkeit eine erhöhte Bremswirkung beziehungsweise einen erhöhten Drehwiderstand für die Hinterräder bereitstellen. Durch das Bremsen der Räder kann verhindert werden, dass der Rollator sich widerstandslos von der stolpernden Person entfernt. Vielmehr kann sich die Person aufgrund der Bremswirkung trotz des Stolperimpulses weiterhin an dem Rollator abstützen, so dass verhindert werden kann, dass die Person stützt.

Analog kann auch, wenn die Rollvorrichtung hangabwärts bewegt wird, verhindert werden, dass die Rollvorrichtung aufgrund der Hangabtriebskraft ungehindert sukzessive an Geschwindigkeit zunimmt. Entsprechend kann verhindert werden, dass sich die Rollvorrichtung mit einer Geschwindigkeit bewegt, bei welcher sie nicht mehr sicher zu gebrauchen oder zu steuern ist, ohne dass der die Rollvorrichtung führende Person die Rollvorrichtung aktiv abzubremsen hat.

Die Vorrichtung und/oder das Dämpfungselement können derart ausgebildet sein, dass das Dämpfungselement eine Dämpfungskraft lediglich bei einer Expansion des Dämpfungselements, mithin einer Verlängerung des Dämpfungselements, im Dämpfungselement erzeugt wird, und bei einer Kompression des Dämpfungselements, mithin einer Verkürzung der Länge des Dämpfungselements, keine Dämpfungskraft bereitgestellt wird. Alternativ können die Vorrichtung und/oder das Dämpfungselement derart ausgebildet sein, dass das Dämpfungselement eine Dämpfungskraft lediglich bei einer Kompression des Dämpfungselements im Dämpfungselement erzeugt wird, und bei einer Expansion des Dämpfungselements keine Dämpfungskraft bereitgestellt wird. Ferner alternativ können die Vorrichtung und/oder das Dämpfungselement derart ausgebildet sein, dass das Dämpfungselement eine Dämpfungskraft bei einer Kompression und einer Expansion des Dämpfungselements im Dämpfungselement erzeugt wird. Bevorzugt ist dabei die Höhe der Dämpfungskraft bei gleicher Geschwindigkeit der Kompression und Expansion in etwa gleich hoch. Alternativ können die resultierenden Dämpfungskräfte bei gleicher Geschwindigkeit der Kompression und Expansion auch unterschiedlich hoch sein.

Unter dem Begriff "Achse" wird vorliegend eine Achse im Sinne einer mechanischen Komponente, entsprechend eines Schaftes oder einer Welle verstanden. Die "Drehachse" hingegen stellt eine Achse im geometrischen Sinne, mithin eine imaginäre, geometrische Achse dar.

Gemäß einer bevorzugten Ausführungsform weist das Dämpfungselement bevorzugt unterhalb eines vorgegebenen Schwellenwerts der Geschwindigkeit der Längenänderung eine erste Dämpfungskonstante auf, wobei die erste Dämpfungskonstante bevorzugt derart vorgegeben ist, dass eine Längenänderung im Wesentlichen nicht gedämpft wird, und das Dämpfungselement ab dem Schwellenwert eine zweite Dämpfungskonstante aufweist, welche ein Dämpfen der Längenänderung bewirkt. Dadurch ist es möglich, bei Drehgeschwindigkeiten des Rotationselements, welche eine Geschwindigkeit der Längenänderung des Dämpfungselements unterhalb des Schwellenwerts bedingen, eine hohe Leichtgängigkeit des Rotationselements bereitzustellen. Bei Drehgeschwindigkeiten, welche eine Geschwindigkeit der Längenänderung oberhalb des Schwellenwerts bedingen, kann ein (starkes) Abbremsen des Rotationselements erfolgen.

Unter einem Rotationselement wird ein physischer Körper verstanden, welcher um die Drehachse roteierbar ausgebildet ist. Vorteilhafte Ausbildungen eines Rotationselements sind in der vorliegenden Beschreibung offenbart.

Der Schwellenwert kann einen Toleranzbereich unterhalb und/oder oberhalb seines Vorgabewertes aufweisen, in welchem die Dämpfungskonstante einen Zwischenwert zwischen der ersten Dämpfungskonstante und der zweiten Dämpfungskonstante aufweist. Das Dämpfungselement ist hierbei bevorzugt derart ausgebildet, so dass der Toleranzbereich in Bezug auf den Bereich der Geschwindigkeiten der Längenänderung, für dessen Verwendung das Dämpfungselement ausgebildet ist, signifikant kleiner ist.

Alternativ kann Vorrichtung auch derart ausgebildet sein, dass bei Drehgeschwindigkeiten, welche eine Geschwindigkeit der Längenänderung oberhalb des Schwellenwerts bedingen, die Dämpfungswirkung des Dämpfungselements derart auf das Rotationselement wirkt, dass eine vorgegebenen maximale Geschwindigkeit nicht überstiegen werden kann, da der via des Dämpfungselements erzeugte Widerstand entsprechend ansteigt. Diese Ausführung kann insbesondere bei Anwendungen vorteilhaft sein. bei welchen ein plötzliches starkes Abbremsen hinderlich ist, beispielsweise wenn ein Kind auf Laufrad führt.

Der Schwellenwert ist bevorzugt auf den Anwendungsfall und die Kinematik der Rollvorrichtung angepasst. Beispielsweise kann bei einer Rollvorrichtung wie einem Rollator, einem Rollstuhl oder einem Lauflernrad durch die Konfigurierung des Dämpfungselements, des Stützelements und/oder des Trägerelements festgelegt werden, dass die Vorrichtung erst ab einer vorgegebenen Geschwindigkeit, mit welcher die die Vorrichtung aufweisende Rollvorrichtung bewegt wird, ein Bremsen eines oder mehrerer Räder der Rollvorrichtung bewirkt.

Ein besonders effektives Abbremsen einer die Vorrichtung aufweisenden Rollvorrichtung kann erzielt werden, wenn bei Überschreiten des vorgegebenen Schwellenwerts der Geschwindigkeit der Längenänderung die Längenänderung blockiert wird. Mit anderen Worten kann das Dämpfungselement derart ausgebildet sein, dass das Dämpfungselement bei Überschreiten des Schwellenwertes keine Längenänderung ermöglicht.

Gemäß einer weiteren Ausführungsform können das Trägerelement, das Stützelement und das Dämpfungselement in Form eines Kurvengetriebes ausgebildet sein. Dadurch können die Vorrichtung und insbesondere das Dämpfungselement in einfacher Weise beispielsweise an einem Rad oder einem Trägerrahmen angeordnet werden. Die Vorrichtung und mithin eine die Vorrichtung aufweisende technische Einrichtung, wie etwa eine Rollvorrichtung, kann so vergleichsweise einfach aufgebaut sein und/oder ein geringes Gewicht aufweisen.

Gemäß einer Ausführungsform stellt das Stützelement eine Führung für die zweite Seite des Dämpfungselements bereit, wobei das Dämpfungselement auf der zweiten Seite ein Mitnehmerelement aufweist, welches an dem Stützelement gleitgelagert und/oder rollengelagert ist, und das Dämpfungselement auf der ersten Seite an dem Trägerelement festgelagert ist. Dadurch kann das Dämpfungselement im Wesentlichen an dem Trägerelement und so an der Achse und/oder dem Trägerrahmen befestigt sein. Die Längenäderung wird entsprechend durch das als Führung ausgebildete Stützelement erzeugt, welches bevorzugt fest an dem Rotationselement angeordnet ist. Das Stützelement dreht sich somit bei einer Drehung des Rotationselements mit diesem mit. Entsprechend erfährt das Stützelement, mithin die Führung, eine Drehung relativ zum Mitnehmerelement, das Mitnehmerelement wird folglich in der Führung geführt. Ändert sich ein Radius der Führung über den Umfang gesehen in Bezug auf die Drehachse des Rotationselements, wie bevorzugt zumindest in dem vorgegebenen Winkelabschnitt vorgesehen, so erzeugt dies beim Rotieren des Rotationselements eine Änderung der radialen Position des im Wesentlichen drehfest angeordneten Mitnehmers in Bezug auf die Drehachse, was die Längenänderung bewirkt.

Das Mitnehmerelement kann bevorzugt einen Führungsstift, einen Führungsschlitten, einen Nippel und/oder einen Bowdenzug aufweisen.

Gemäß einer weiteren Ausführungsform kann das Trägerelement eine Führung für die erste Seite des Dämpfungselements bereitstellen, wobei das Dämpfungselement auf der ersten Seite ein Mitnehmerelement aufweist, welches an dem Trägerelement gleitgelagert und/oder rollengelagert ist, und das Dämpfungselement auf der zweiten Seite an dem Stützelement festgelagert. Entsprechend kann das Dämpfungselement über das Stützelement an dem Rotationselement befestigt sein, es dreht folglich bei einer Drehung des Rotationselements mit diesem mit. Das drehfest an der Achse und/oder dem Trägerrahmen angeordnete Trägerelement mag dabei in Umfangsrichtung gesehen zumindest in dem vorgegebenen Winkelabschnitt einen sich verändernden Radius der Führung bezogen auf die Drehachse des Rotationselements aufweisen. Dies erzeugt beim Rotieren des Rotationselements eine Änderung der radialen Position des mit dem Rotationselement mitdrehenden Mitnehmerelements in Bezug auf die Drehachse, was die Längenänderung bewirkt.

Vorteilhafterweise ist die Führung in Form eine exzentrisch zur Drehachse angeordneten Exzenterscheibe ausgebildet. Dadurch kann auch einfache Weise ein sich bezogen auf die Drehachse verändernder Radius im vorgegebenen Winkelabschnitt ermöglicht werden.

Alternativ und/oder zusätzlich kann die Führung in Form einer sich im Wesentlichen in Umfangsrichtung erstreckenden Führungskurve, bevorzugt einer Führungsnut, ausgebildet sein, wobei die Führungskurve in Umfangsrichtung bezogen auf die Drehachse zumindest im vorgegebenen Winkelabschnitt einen sich bevorzugt kontinuierlich verändernden Führungsradius aufweist, wobei bevorzugt der Führungsradius im Umfangsabschnitt sich von einem Grundwert auf einen davon verschiedenen Exzenterwert und wieder zurück auf den Grundwert verändert, wobei bevorzugt der vorgegebene Winkelabschnitt sich im Wesentlichen über den gesamten Umfang erstreckt.

Gemäß einer weiteren Ausführungsform weist die Festlagerung eine Dämpfungselement-Aufnahme auf, wobei das Dämpfungselement mit einer Seite in der Dämpfungselement-Aufnahme befestigbar ist, wobei die Dämpfungselement-Aufnahme bevorzugt eine Mitnehmerführung zum Führen, bevorzugt zum radialen Führen, eines Mitnehmerelements der anderen Seite des Dämpfungselements aufweist. Bevorzugt ist die Aufnahme ausgebildet, um das Dämpfungselement lösbar aufzunehmen. Mit anderen Worten kann die Aufnahme dazu ausgebildet sein, dass ein in der Aufnahme aufgenommenes Dämpfungselement wieder von der Aufnahme entfernbar ist. So kann ein Dämpfungselement mit ersten Dämpfungscharakteristika durch ein Dämpfungselement mit von den ersten Dämpfungscharakteristika zumindest in einer Größe verschiedenen zweiten Dämpfungscharakteristika ersetzt werden, oder etwa zu Wartungszwecken entnommen oder ausgetauscht werden.

Vorzugsweise weist das Trägerelement die Dämpfungselement-Aufnahme auf, wobei die Dämpfungselement-Aufnahme bevorzugt an einer feststehenden Achse des Trägerelements oder direkt an einem Trägerrahmen befestigt ist.

Alternativ kann auch das Stützelement die Dämpfungselement-Aufnahme aufweisen, wobei das Stützelement bevorzugt in Form einer Felge des Rades ausgebildet ist, wobei die Dämpfungselement-Aufnahme bevorzugt in einer Speiche der Felge integriert ist.

Gemäß einer weiteren Ausführungsform sind das Trägerelement, das Stützelement und das Dämpfungselement in Form eines Koppelgetriebes ausgebildet, bevorzugt in Form einer Schubkurbel, wobei bevorzugt das Stützelement in Form eines Kurbelelements ausgebildet ist und das Dämpfungselement als Schubelement fungiert, wobei das erste Ende an dem Trägerelement festgelagert oder drehgelagert ist und das zweite Ende an dem Stützelement drehgelagert ist. Dadurch kann die Vorrichtung besonders zuverlässig vor Witterungseinflüssen und/oder Schmutz geschützt ausgebildet sein.

Vorzugsweise ist das erste Ende des Dämpfungselements an dem Trägerelement festgelagert oder drehgelagert, wobei das Trägerelement ausgebildet ist, um an der Achse oder dem Trägerrahmen fixiert zu werden, und ist das zweite Ende des Dämpfungselements an dem Stützelement drehgelagert, wobei das Stützelement ausgebildet ist, um an dem Rotationselement beabstandet von der Drehachse fixiert zu werden.

Gemäße einer weiteren Ausführungsform weist das Dämpfungselement eine mit einem Füllmedium gefüllte Aufnahme und einen in der Aufnahme verschiebbar angeordneten Wirkkörper zum Interagieren mit dem Füllmedium auf, wobei der Wirkkörper mit einem Kraftübertragungskörper zum Übertragen einer äußeren Kraft auf den Wirkkörper verbunden ist. Dadurch kann auf einfache Weise ein effektiv wirkendes Dämpfungselement bereitgestellt werden. Wenn das Füllmedium eine Flüssigkeit ist, welche zumindest bis zu einem Grenzwert im Wesentlichen inkompressibel ist, kann die Dämpfungskonstante über einen großen Bereich der Geschwindigkeit der Längenänderung im Wesentlichen gleich sein. Die Längenänderung des Dämpfungselements bewirkt dabei eine Relativbewegung des Wirkkörpers gegenüber der Aufnahme.

Vorteilhafterweise weist der Wirkkörper einen ersten Körper zum Interagieren mit dem Füllmedium und einen über ein Kopplungselement mit dem ersten Körper gekoppelten, bevorzugt elastisch gekoppelten, zweiten Körper auf, wobei der zweite Körper und/oder der erste Körper mindestens eine Durchlassöffnung aufweisen, durch welche das Füllmedium strömen kann, und wobei der erste Körper einen Ventilkörper bildet und der zweite Körper einen Ventilsitz bildet, so das ein Fluss des Füllmediums durch die Durchlassöffnung in Abhängigkeit von der Ventilstellung zugelassen oder unterbunden werden kann, wobei der zweite Körper in einer Verschieberichtung, bevorzugt einer Längsrichtung des Dämpfungselements, relativ zum ersten Körper verschiebbar ist. Dadurch können für das Dämpfungselement je nach Position des zweiten Körpers relativ zum ersten Körper zumindest zwei unterschiedliche Dämpfungskonstanten für das Dämpfungselement bereitgestellt werden. Die Position des zweiten Körpers relativ zum ersten Köper ist dabei abhängig von der Geschwindigkeit der Längenänderung zumindest in einer Richtung, mithin zumindest in Expansion oder Kompression.

Der Schwellenwert korrespondiert dabei bevorzugt mit der Geschwindigkeit der Längenänderung, bei welcher der zweite Körper bevorzugt aufgrund seines eigenen Strömungswiderstands gegenüber dem Füllmedium von der den Strom durch die Durchlassöffnung zulassenden Ventilstellung in die die Durchlassöffnung verschließende Ventilstellung übergeht.

Gemäß einer weiteren Ausführungsform ist das Dämpfungselement ausgebildet, eine Kompression des Dämpfungselements zu dämpfen, wobei der Kraftübertragungskörper als knickstabile Kolbenstange ausgebildet ist.

Alternativ oder zusätzlich kann das Dämpfungselement ausgebildet sein, eine Expansion beziehungsweise synonym hierzu eine Extension des Dämpfungselements zu dämpfen, wobei der Kraftübertragungskörper bevorzugt zugsteif in Längsrichtung und bevorzugt zusätzlich flexibel, bevorzugt biegeweich, in radialer Richtung, mithin quer zur Längsrichtung des Dämpfungselements ausgebildet ist, wobei der Kraftübertragungskörper bevorzugt als Draht oder Seil, bevorzugt als Drahtseil, ausgebildet ist. Durch die flexible Ausbildung des Kraftübertragungskörpers ist es möglich, die Belastung auf den Wirkkörper quer zur Längsrichtung des Dämpfungselements, welche einer Auszugsrichtung des Wirkkörpers entspricht, zumindest zu reduzieren. Insbesondere mag es dadurch möglich sein, Querkräfte, welche quer zur Längsrichtung durch das Trägerelement oder das Stützelement auf den Kraftübertragungskörper eingeleitet werden, von dem Wirkkörper zu entkoppeln. Mit anderen Worten werden die Querkräfte nicht auf den Wirkkörper übertragen, so dass entsprechend ein Verschleiß des Wirkkörpers reduziert werden kann.

Gemäß einer weiteren Ausführungsform umfasst die Vorrichtung ferner eine Einstelleinheit, welche ausgebildet ist zum Verstellen der resultierenden Größe der durch eine Drehung des Stützelements um die Drehachse erzeugten Längenänderung des Dämpfungselements im vorgegebenen Winkelabschnitt, zum Verstellen einer Dämpfungskonstante des Dämpfungselements, zum Ausschalten und/oder Auskoppeln des Dämpfungselements und/oder zum Verändern des Schwellenwerts der Geschwindigkeit. Dadurch kann die durch die Vorrichtung auf das Rotationselement wirkende Bremskraft beziehungsweise der auf das Rotationselement wirkende Drehwiderstand via der Einstelleinheit einstellbar sein.

Gemäß einer weiteren Ausführungsform umfasst die Vorrichtung ferner eine zusätzliche Bremse, bevorzugt eine Feststellbremse, für das Rotationselement, derart ausgebildet, so dass bei Erreichen eines vorgegebenen Grenzwerts einer durch das Dämpfungselement erzeugten Dämpfungskraft die Feststellbremse aktiviert wird, wobei die Feststellbremse bevorzugt derart ausgebildet ist, so dass der Rotationselement ein kontinuierliches Abbremsen bis zum Stillstand erfährt, wobei eine Höhe der durch die Feststellbremse auf das Rotationselement wirkenden Abbremskraft bevorzugt vorgegeben und/oder einstellbar ist. Dadurch kann zusätzlich ermöglicht werden, dass nach einem Überschreiten des vorgegebenen Grenzwerts der Rotationselement zum Stillstand gebracht wird. Ist beispielsweise ein Kinderwagen mit einer derartigen Vorrichtung ausgestattet, so kann etwa, wenn der Kinderwagen ungeführt einen Abhang hinunter rollt, die Vorrichtung ein Bremsen zumindest zweier Räder des Kinderwagens erzeugen, und bei Erreichen einer Grenzgeschwindigkeit des Kinderwagens, welche mit dem vorgegebenen Grenzwert korrespondiert, die Feststellbremse aktiviert werden, so dass der Kinderwagen nicht nur gebremst, sondern bevorzugt kontinuierlich bis zum Stillstand abgebremst wird, ohne dass ein abruptes Blockieren der Räder einen Verlust der Bodenhaftung der Räder bewirken würde. Bevorzugt entspricht die Feststellbremse einer bereits an der Rollvorrichtung, beispielweise einem Kinderwagen, ohnehin vorgesehenen zusätzliche Bremse, bevorzugt einer Feststellbremse.

Vorzugsweise weist die Vorrichtung ferner ein Gehäuse zum Einhausen des Dämpfungselements, des Trägerelements und/oder des Stützelements auf. Dadurch kann verhindert werden, dass Steine, Schmutz und/oder Flüssigkeiten zum Dämpfungselement, Trägerelement und/oder Stützelement gelangen und diese verunreinigen oder anderweitig schädigen, und so die Funktion der Vorrichtung beeinträchtigen könnten.

Gemäß einer weiteren Ausführungsform weist das Dämpfungselement eine Rückstelleinheit auf, welche eingerichtet ist, das Dämpfungselement in eine vorgegebene Stellung zurückzuführen, wenn das Dämpfungselement eine Längenänderung aus dieser vorgegebenen Stellung erfahren hat. Bevorzugt ist die Rückstelleinheit dazu eingerichtet, eine Expansion des Dämpfungselements zu bewirken. Alternativ kann die Rückstelleinheit dazu eingerichtet, eine Kompression des Dämpfungselements zu bewirken. Bevorzugt ist die Rückstelleinheit in Form einer Druckfeder oder einer Zugfeder, bevorzugt einer Spiralfeder, ausgebildet. Alternativ kann die Rückstelleinheit auch aus einem elastischen Material, bevorzugt einem elastischen Kunststoff ausgebildet sein. Als besonders vorteilhaft hat sich erwiesen, wenn die Rückstelleinheit ein den Kraftübertragungskörper zumindest teilweise umschließender Schlauch ist, welcher an seinem ersten Ende mit der Aufnahme verbunden ist und an seinem zweiten Ende mit dem Kraftübertragungskörper verbunden ist.

Vorzugsweise weist der Winkelbereich eine Mehrzahl von Bereichen mit steigendem Radius und sich daran anschließenden sinkendem Radius auf. Entsprechend liegt nicht nur eine Anstiegsphase pro Umdrehung vor, sondern eine Mehrzahl entsprechend der Mehrzahl von vorgenannten Bereichen, beispielsweise 2, 3, 4 oder 5. Dadurch kann die erforderliche Weglänge, bei welcher erforderliche Schwellenwert der Geschwindigkeit erreicht wird und welche einem Abrollweg des Rotationselements entspricht, im Vergleich zu einer Vorrichtung mit lediglich einem Anstieg des Radius über den Umfang entsprechend der Anzahl von vorgenannten Bereichen verringert sein. Die Mehrzahl von Bereichen sind bevorzugt hinsichtlich Steigung und Umfangslänge zueinander gleich ausgebildet. So erfährt das Dämpfungselement beim Durchlaufen jedes Bereiches im Wesentlichen die gleiche Änderung. Mithin kann dadurch ermöglicht werden, auch bei Rädern, die etwa aufgrund eines Durchlaufens einer Kurve eine unterschiedliche Winkelstellung zueinander aufweisen, beide Räder sehr ähnlich oder gar im Wesentlichen gleich abgebremst werden. Insbesondere kann dadurch ein zeitlich unterschiedliches Einsetzen der Bremswirkung am ersten Rad, beispielsweise einem linken Hinterrad, und einem zweiten Rad, etwa einem rechten Hinterrad einer Rollvorrichtung reduziert oder gar egalisiert werden.

Die oben gestellte Aufgabe wird weiterhin durch eine Rollvorrichtung, bevorzugt ausgebildet als Rollator, Gehwagen, Kinderwagen, Rollstuhl, Lauflernwagen, Lauffrahrrad oder Spielgerät, ein Fahrradanhänger, eine Schubkarre, insbesondere eine Schubkarre für den Bau, ein Servierwagen, insbesondere für Flugzeug Bahn oder Schiff, eine Roll-Hundeleine oder eine Aufrollvorrichtung beim Segeln, mit den Merkmalen des Anspruchs 19 gelöst. Vorteilhafte Weiterbildungen der Rollvorrichtung ergeben sich aus dem Unteranspruch sowie der vorliegenden Beschreibung und den Figuren.

Entsprechend wird eine Rollvorrichtung, bevorzugt Rollator, Gehwagen, Kinderwagen, Rollstuhl, Lauflernwagen, Lauffrahrrad, Spielgerät, Fahrradanhänger, Schubkarre, insbesondere Schubkarre für den Bau, Servierwagen, insbesondere für Flugzeug, Bahn oder Schiff, oder Gepäckwagen, vorgeschlagen, umfassend einen Trägerrahmen und eine Mehrzahl von an dem Trägerrahmen drehbar angeordneten Rädern. Die Rollvorrichtung kennzeichnet sich ferner dadurch, dass zumindest eine Vorrichtung gemäß einem der vorstehenden Ausführungsformen zum Bremsen zumindest eines Rades der Mehrzahl von Rädern zwischen dem zu bremsenden Rad und dem Trägerrahmen angeordnet ist.

Durch die Rollvorrichtung können die zuvor hinsichtlich der Vorrichtung beschriebenen Vorteile und Wirkungen analog erzielt werden.

Gemäß einer bevorzugten Ausführungsform ist das Trägerelement der Vorrichtung an dem Trägerrahmen angebracht und das Stützelement der Vorrichtung an dem zu bremsenden Rad angebracht.

Die oben gestellte Aufgabe wird weiterhin durch einen Windkraftanlagen-Rotor, umfassend eine Rotorwelle, zumindest ein an der Rotorwelle angebrachtes Rotorblatt und eine Vorrichtung gemäß einer der vorgenannten Ausführungen gelöst.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Schnittansicht durch eine Vorrichtung zum Bremsen eines Rotationselements in Form eines Rades;
- Figur 2: schematisch eine Seitenansicht der Vorrichtung aus Figur 1;
- Figur 3: schematisch eine Schnittansicht einer Vorrichtung zum Bremsen eines Rotationselements gemäß einer weiteren Ausführungsform;
- Figur 4: schematisch eine Schnittansicht einer Vorrichtung zum Bremsen eines Rotationselements gemäß einer weiteren Ausführungsform;
- Figur 5: schematisch eine Schnittansicht durch eine Vorrichtung zum Bremsen eines Rotationselements gemäß einer weiteren Ausführungsform;
- Figur 6: schematisch eine Schnittansicht durch eine Vorrichtung zum Bremsen eines Rotationselements gemäß einer weiteren Ausführungsform;
- Figur 7: schematisch eine Seitenansicht der Vorrichtung aus Figur 6;
- Figur 8: schematisch eine weitere Seitenansicht der Vorrichtung aus Figur 6;
- Figur 9: eine schematische Seitenansicht eine Exzenterscheibe einer Vorrichtung zum Bremsen eines Rotationselements gemäß einer weiteren Ausführungsform;
- Figur 10: schematisch eine weitere Seitenansicht der Exzenterscheibe aus Figur 9;
- Figuren 11A und 11B: schematisch eine Seitenansicht und eine perspektivische Seitenansicht einer Vorrichtung zum Bremsen eines Rotationselements gemäß einer weiteren Ausführungsform;
- Figur 11C: schematisch eine Schnittansicht durch die Aufnahme der Vorrichtung der Figuren 11A und 11B;
- Figur 12: schematisch eine Rückansicht einer Rollvorrichtung in Form eines Rollators;
- Figur 13: schematisch die Rollvorrichtung aus Figur 12 in einer Seitenansicht;
- Figur 14: schematisch eine Rückansicht einer Rollvorrichtung in Form eines Rollators gemäß einer weiteren Ausführungsform;
- Figur 15: schematisch eine Rückansicht einer Rollvorrichtung in Form eines Rollators gemäß einer weiteren Ausführungsform;
- Figur 16: schematisch eine Rückansicht einer Rollvorrichtung in Form eines Rollstuhls;
- Figur 17: schematisch eine Rückansicht einer weiteren Rollvorrichtung in Form eines Rollstuhls;
- Figur 18: schematisch eine Schnittansicht durch ein Dämpfungselement;
- Figur 19: schematisch eine Schnittansicht einer Vorrichtung zum Bremsen eines Rotationselements gemäß einer weiteren Ausführungsform;
- Figur 20: zeigt schematisch eine Schnittansicht einer Vorrichtung zum Bremsen eines Rotationselements gemäß einer weiteren Ausführungsform;
- Figur 21: zeigt schematisch eine Schnittansicht einer Vorrichtung zum Bremsen eines Rotationselements gemäß einer weiteren Ausführungsform; und
- Figur 22: zeigt eine schematisch eine weitere Rollvorrichtung in Form eines Kinderwagens.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

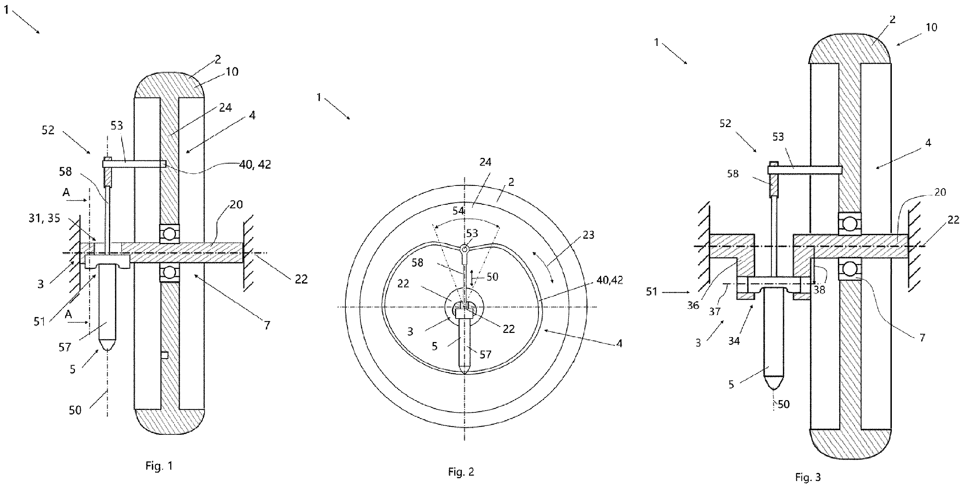

In Figur 1 ist schematisch eine Schnittansicht durch eine Vorrichtung 1 zum Bremsen eines Rotationselements 10 in Form eines Rades 2 gezeigt. Das Rad 2 weist eine Felge 24 auf und ist über ein Kugellager 7 um eine geometrische Drehachse 22 drehbar zu einer feststehenden mechanischen Achse 20 gelagert. Die Vorrichtung 1 weist ein Trägerelement 3 zum Abstützen gegen die Achse 20 auf. Hierbei ist in der Achse 20 eine Dämpfungselement-Aufnahme 35 des Trägerelements 3 angeordnet, welche als Festlager 31 für ein Dämpfungselement 5 fungiert. Ferner umfasst die Vorrichtung 1 ein um die Drehachse 22 relativ zum Trägerelement 3 drehbares Stützelement 4, welches kraftübertragend an dem Rad 2 vorgesehen ist. Zwischen dem Trägerelement 3 und dem Stützelement 4 erstreckt sich das Dämpfungselement 5, wobei eine erste Seite 51 des Dämpfungselements 5 in der Dämpfungselement-Aufnahme 35 fest gelagert ist. Mit anderen Worten ist das Dämpfungselement 5 in der Dämpfungselement-Aufnahme 35 fixiert.

Eine zweite Seite 52 des Dämpfungselements 5 ist an dem Stützelement 4 gelagert. Hierzu weist das Stützelement 4, welches vorliegend als Felge 24 ausgebildet ist, eine als sich in Umfangsrichtung des Rades 2 erstreckende Führungsnut 42 in der Felge 24 ausgebildete Führung 40 auf, in welcher ein Mitnehmerelement 53 des Dämpfungselements 5 gleitend geführt ist.

Das Dämpfungselement 5 weist eine mit einem Füllmedium, vorliegend einem dilatantes Fluid, gefüllte Aufnahme 57 und einen in der Aufnahme 57 verschiebbar angeordneten Wirkkörper (nicht gezeigt) zum Interagieren mit dem Füllmedium auf, wobei der Wirkkörper mit einem Kraftübertragungskörper 58 zum Übertragen einer äußeren Kraft auf den Wirkkörper verbunden ist. Der Kraftübertragungskörper 58 stellt hierbei die zweite Seite des Dämpfungselements 5 dar und ist gegenüber der Aufnahme 57, welche die erste Seite des Dämpfungselements 5 darstellt, relativ in einer Längsrichtung 50 verschiebbar. Mithin ist das Dämpfungselement 5 in der Längsrichtung 50 expandierbar und komprimierbar.

Alternativ kann das Füllmedium auch in Form eines im Wesentlichen inkompressiblen Öls bereitgestellt sein.

Figur 2 zeigt schematisch eine Seitenansicht senkrecht zur Drehachse 22 der Vorrichtung 1 aus Figur 1. Die Führung 40 weist in Umfangsrichtung 23 des Rades 2 einen im Wesentlichen gleichbleibenden Radius in Bezug auf die Drehachse 22 auf, außer in einem vorgegebenen Winkelabschnitt 54, in welchem sich der Radius der Führung 40 bzw. der Führungsnut 42 sukzessive bis zu einem Minimalwert verringert und anschließend wieder auf den gleichbleibenden Radius der Führung außerhalb des Winkelabschnitts 54 erhöht.

Das Mitnehmerelement 53, welches in der Führung 40 geführt ist, erfährt daher bei einer Umdrehung des Rades 2 im vorgegebenen Winkelabschnitt 54 eine Verschiebung in Längsrichtung 50 in Richtung der Drehachse 22 und anschließend eine Verschiebung in entgegengesetzter Richtung. Der Kraftübertragungskörper 58 wird mithin im vorgegebenen Winkelabschnitt 54 zunächst in die Aufnahme 57 geschoben und dann wieder aus dieser herausgezogen. Das Dämpfungselement 5 wird folglich zunächst komprimiert und anschließend wieder expandiert. Die Längenänderung entspricht der Differenz zwischen dem (maximalen) gleichbleibenden Radius und dem minimalen Radius.

In dem vorgegebenen Winkelabschnitt 54 bewirkt eine Drehung des Stützelements 4, d.h. vorliegend des Rades 2, um die Drehachse 22 eine Längenänderung des Dämpfungselements 5. Das Dämpfungselements 5 ist dabei dazu eingerichtet, eine der Längenänderung des Dämpfungselements 5 entgegengerichteten Dämpfungskraft bereitzustellen, deren Höhe abhängig ist von der Geschwindigkeit der Längenänderung des Dämpfungselements 5. Die Dämpfungskraft stellt mithin für das Mitnehmerelement 53 einen geschwindigkeitsabhängigen Widerstand dar, welcher einer durch die Führung 40 aufgrund der Drehung des Rades 2 vorgegebenen Bewegung des Mitnehmerelements 53 in Längsrichtung 50 entgegen gerichtet ist.

Da das Mitnehmerelement 53 in der Führungsnut 42 geführt ist, kann sich das Stützelement 4, mithin das Rad 2, nur in einem Ausmaß weiter drehen, wie es die Verschiebung des Mitnehmerelements 53 in Längsrichtung 50 erlaubt. Der Widerstand gegen eine Lageänderung des Mitnehmerelements 53 in Längsrichtung 50 bewirkt mithin ein Bremsen der Bewegung des Stützelements 4 um die Drehachse 22 und mithin ein Bremsen der Drehbewegung des Rades 2 um dessen Drehachse 22.

Die Vorrichtung 1 ist folglich vorliegend in Form eines Kurvengetriebes ausgebildet, wobei das Dämpfungselement 5 via des Mitnehmerelements 53 ein Abgriffsglied bzw. einem Abtaster des Kurvengetriebes darstellt und die Führung 40 einen Kurventräger des Kurvengetriebes darstellt.

Das Dämpfungselement 5 weist unterhalb eines vorgegebenen Schwellenwerts der Geschwindigkeit der Längenänderung in Längsrichtung 50 eine erste Dämpfungskonstante auf, welche derart niedrig ist, dass eine Längenänderung in Längsrichtung 50 im Wesentlichen keine Dämpfungskraft erzeugt. Die Geschwindigkeit der Längenänderung in Längsrichtung 50 ist aufgrund der oben beschriebenen Kopplung zwischen Stützelement 4, Dämpfungselement 5 und Trägerelement 3 im vorgegebenen Winkelabschnitt 54 proportional zur Drehgeschwindigkeit des Rades 2. Aufgrund der niedrigen Dämpfungskonstante unterhalb des Schwellenwerts ist die Drehung des Rades 2 um die Drehachse 22 bis zu einer Drehgeschwindigkeit, welche zum Schwellenwert der Geschwindigkeit der Längenänderung des Dämpfungselements 5 korrespondiert, im Wesentlichen ungedämpft bzw. ungebremst.

Übersteigt die Geschwindigkeit der Längenänderung den vorgegebenen Schwellenwert, so weist das Dämpfungselement 5 eine zweite Dämpfungskonstante auf welche signifikant höher ist als die erste Dämpfungskonstante unterhalb des Schwellenwerts. Aufgrund der signifikant höheren zweiten Dämpfungskonstante wird im Dämpfungselement 5 eine der Längenänderung entgegengerichtete Dämpfungskraft erzeugt, welche wie oben beschrieben ein Bremsen des Rades 2 bewirkt.

Folglich ist durch die Vorrichtung 1 eine passive Bremse bereitgestellt, welche unterhalb des Schwellenwerts ein im Wesentlichen freigängiges Drehen des Rades 2 erlaubt, und oberhalb des Schwellenwerts automatisch ein Abbremsen des Rades 2 bewirkt.

Figur 3 zeigt eine Vorrichtung 1 zum Bremsen eines Rotationselements 10 gemäß einer weiteren Ausführungsform. Das Rotationselement ist vorliegend wiederum in Form eines Rades 2 ausgebildet. Analog zur ersten Ausführungsform aus Figur 1 weist die Vorrichtung 1 aus Figur 3 eine feststehende Achse 20 auf, welche die Drehachse 22 definiert. Um die Achse 20 ist das Rotationselement 10 via der Kugellagerung 7 drehbar gelagert. Das Stützelement 4 ist in dieser Ausführungsform als Festlager für das Mitnehmerelement 53 ausgebildet. Der Kraftübertragungskörper 58, welcher vorliegend die zweite Seite 52 des Dämpfungselements 5 darstellt, ist an dem Mitnehmerelement 53 drehbar gelagert. Alternativ könnte das Stützelement 4 auch eine Drehlagerung für das Mitnehmerelement 53 bereitzustellen, wobei dann bevorzugt der Kraftübertragungskörper 58 fest mit dem Mitnehmer 53 verbunden ist.

Das Trägerelement 3 ist vorliegend durch die Achse 20 bereitgestellt, wobei die erste Seite 51 des Dämpfungselements 5 in einem Exzenterabschnitt 36 des Trägerelements 3 drehgelagert ist. Die Drehlagerungsachse 37 der Drehlagerung 34 des Trägerelements 3 ist dabei um einen Abstand 38 von der Drehachse 22 beabstandet, sodass ein Drehen des Rotationselements 10 um die Drehachse 22, was einem Drehen des Stützelements 4 um die Drehachse 22 entspricht, eine sukzessive Längenänderung des Dämpfungselements 5 zwischen einem Maximalwert, welcher dem Zustand wie in Figur 3 gezeigt entspricht, und einem Minimalwert, welche einem Zustand entspricht, bei dem das Rotationselement 10 in Bezug auf die Darstellung in Figur 3 um 180° gedreht ist. Aufgrund des Abstands 38 zwischen der Drehachse 22 und der Drehlagerungsachse 37 erfährt das Dämpfungselement 5 bei einer Drehung aus der in Figur 3 gezeigten Position um die Drehachse 22 in den ersten 180° der Drehung eine sukzessive Verkürzung, mithin eine Kompression, in Längsrichtung 50, und in den sich daran anschließenden 180° eine sukzessive Verlängerung, mithin eine Expansion, in Längsrichtung 50. Der vorgegebene Winkelabschnitt erstreckt sich folglich um den gesamten Umfang des Rotationselements 10, folglich in einem Winkel von 360°.

Das Dämpfungselement 5 ist ferner analog zur Ausführungsform gemäß der Figuren 1 und 2 ausgebildet. Entsprechend stellt das Dämpfungselement 5 oberhalb des Schwellenwerts der Geschwindigkeit der Längenänderung des Dämpfungselements 5 eine Bremswirkung für das Rad 2 bereit.

Aufgrund der Lagerung des Dämpfungselements 5 an dem Stützelement 4 und dem Trägerelement 3 ist die Vorrichtung 1 hier im Sinne eines Koppelgetriebes ausgebildet.

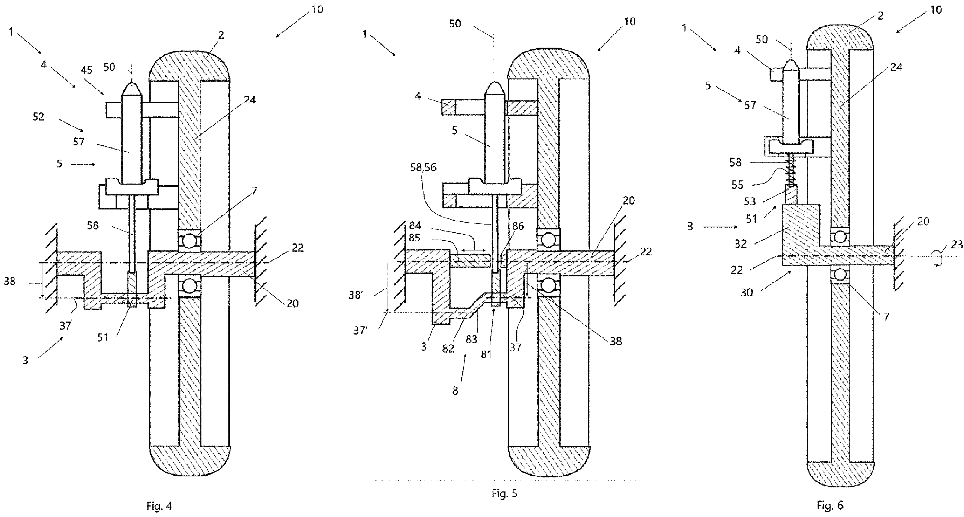

Figur 4 zeigt schematisch eine Schnittansicht einer Vorrichtung 1 zum Bremsen eines Rotationselements 10 gemäß einer weiteren Ausführungsform, welcher im Wesentlichen jener aus Figur 3 entspricht, wobei das Dämpfungselement im Vergleich zu der Ausführungsform in Figur 3 entgegengesetzt orientiert ist. Die erste Seite 51 ist folglich durch den Kraftübertragungskörper 58 ausgebildet, welcher drehbar um die Drehlagerungsachse 37 gelagert ist. Die zweite Seite 52 ist ferner durch die Aufnahme 57 bereitgestellt, welche fest an der Felge 24 befestigt ist. Das Stützelement 4 ist mithin durch eine Festlagerung bereitgestellt, welche wiederum in Form einer Dämpfungselement-Aufnahme 45 ausgebildet ist. Aufgrund des Abstands 38 zwischen der Drehachse 22 und der Drehlagerungsachse 37 erfährt das Dämpfungselement 5 bei einer Drehung aus der in Figur 4 gezeigten Position um die Drehachse 22 in den ersten 180° der Drehung eine sukzessive Verkürzung, mithin eine Kompression, in Längsrichtung 50, und in den sich daran anschließenden 180° eine sukzessive Verlängerung, mithin eine Expansion, in Längsrichtung 50. Der vorgegebene Winkelabschnitt erstreckt sich folglich um den gesamten Umfang des Rotationselements 10, folglich in einem Winkel von 360°.

In Figur 5 ist schematisch eine Schnittansicht durch eine Vorrichtung 1 zum Bremsen eines Rotationselements 10 gemäß einer weiteren Ausführungsform gezeigt. Die Vorrichtung 1 entspricht im Wesentlichen jener aus Figur 5, wobei die Vorrichtung 1 ferner eine Einstelleinheit 8 aufweist, welche hier als Teil des Trägerelements 3 ausgebildet ist. Hierzu ist der Kraftübertragungskörper 58 zwischen einer ersten Lagerposition 81 und einer zweiten Lagerposition 82 verschiebbar an dem Trägerelement 3 drehgelagert. An der ersten Lagerposition weist der Kraftübertragungskörper 58 eine Drehlagerungsachse 37 auf, welche einen Abstand 38 zur Drehachse 22 aufweist. Entsprechend erfährt das Dämpfungselement 5 bei einer Umdrehung des Rotationselements 10 eine Längenänderung wie hinsichtlich Figur 4 beschrieben. Durch Schalten eines Schaltelements 85 kann der Kraftübertragungskörper 58 von der ersten Lagerposition 81 zur zweiten Lagerposition 82 über einen Verbindungsabschnitt 83 verschoben werden. Die zweite Lagerposition 82 weist eine Drehlagerungsachse 37' auf, welche um einen Abstand 38' von der Drehachse 22 beabstandet ist, welcher größer ist, als der Abstand 38 in der erste Lagerposition 81. Dadurch erfährt das Dämpfungselement 5 bei einer Umdrehung des Rotationselements 10 eine entsprechend vergrößerte Längenänderung. Bei gleicher Drehgeschwindigkeit des Rotationselements 10 ist folglich die maximale Geschwindigkeit der Längenänderung des Dämpfungselements 5 in der zweiten Lagerposition 82 größer als in der ersten Lagerposition 81. Entsprechend löst das Dämpfungselement 5 bereits bei einer geringeren Umdrehungsgeschwindigkeit des Rotationselements 10 ein Bremsen des Rotationselements 10 aus.

Um den Kraftübertragungskörper 58 von der ersten Lagerposition 81 zur zweiten Lagerposition 82 zu bewegen, kann das Schaltelement 85 derart bewegt werden, dass eine Durchgangsöffnung 86, durch welche der Kraftübertragungskörper 58 geführt ist, in einer Querrichtung 84, welche orthogonal zur Längsrichtung 50 orientiert ist, versetzt wird. Die Durchlassöffnung 68 kann mithin zwischen zwei Positionen versetzt werden, wobei sie in einer ersten Position oberhalb der ersten Lagerposition 81 angeordnet ist, wie in Figur 5 gezeigt, und in einer zweiten Position oberhalb der zweiten Lagerposition 82 angeordnet ist. Um die Umpositionierung des Kraftübertragungskörpers 58 zu ermöglichen, ist der Kraftübertragungskörper 58 als zugsteifes und biegeweiches Element ausgebildet. Vorliegend ist der Kraftübertragungskörper 58 durch ein Stahlseil bereitgestellt. Der Kraftübertragungskörper 58 ist mithin in Querrichtung 84 flexibel.

Alternativ kann das Dämpfungselement 5 an sich in der Querrichtung 84 verschiebbar an dem Stützelement 4 angeordnet sein. Dies hat den Vorteil, dass der Kraftübertragungskörper 58 stets parallel zur Längsrichtung 50 orientiert sein kann. Somit bleiben Kraftübertragung und Kraftrichtung im Dämpfungselement ideal. Vorzugsweise kann das Dämpfungselement 5 derart ausgebildet sein, dass es an dem Stützelement 4 in zumindest einer Stellung einrasten kann. Vorzugsweise ist das das Dämpfungselement 5 ausgebildet, wechselbar an einem von zwei vorgegebenen Stellungen an dem Stützelement 4 einzurasten, welche vorteilhafterweise in Querrichtung 84 gesehen der ersten Lagerposition 81 und der zweiten Lagerposition 82 entsprechen.

Ferner weist das Dämpfungselement 5 einen den Kraftübertragungskörper 58 großteils umschließenden elastischen Schlauch 56 aus einem Kunststoffmaterial auf, welcher eine Rückstellung des Kraftübertragungskörpers 58 in Längsrichtung 50 in die maximal komprimierte Stellung des Dämpfungselements 5 bewirkt. Mit anderen Worten bewirkt der elastische Schlauch 56 aufgrund seiner Elastizität, dass eine Nullstellung des Dämpfungselements 5, wenn keine äußeren Kräfte auf das Dämpfungselement 5 wirken, einer maximal komprimierten Stellung des Dämpfungselements 5 entspricht. Das Dämpfungselement 5 ist dabei derart ausgebildet, dass eine Dämpfungskraft lediglich bei einer Expansion, mithin einer Verlängerung des Dämpfungselements 5 in Längsrichtung 50, erzeugt wird.

Figur 6 zeigt schematisch eine Schnittansicht durch eine Vorrichtung 1 zum Bremsen eines Rotationselements 10 gemäß einer weiteren Ausführungsform. Die Vorrichtung 1 aus Figur 6 entspricht im Wesentlichen jener aus Figur 4, wobei anstelle der in Figur 4 gezeigten exzentrischen Drehlagerung 34, an welcher die erste Seite 51 des Dämpfungselements 5 drehgekoppelt ist, das Trägerelement 3 eine fest an der starren Achse 20 befestigte Exzenterscheibe 32 aufweist, wobei das Dämpfungselement 5 an der ersten Seite 51 über das Mitnehmerelement 53 über eine Außenfläche der Exzenterscheibe 32 gleitet. Der Kraftübertragungskörper 58 ist dabei bezogen auf die Umfangsrichtung 23 des Rotationselements 10 in einer festen Position fixiert. Mit anderen Worten ist der Kraftübertragungskörper 58 lediglich in Längsrichtung 50 verschiebbar. Ferner ist eine Rückstelleinheit 55 in Form einer Druckfeder vorgesehen, welche bewirkt, dass der Kraftübertragungskörper 58 stets aus der Aufnahme 57 heraus geschoben wird. Mit anderen Worten bewirkt die Rückstelleinheit 45 eine Expansion des Dämpfungselements 5.

Bei einem Drehen des Rotationselements 2 um die Drehachse 22 gleitet wie oben beschrieben die erste Seite 51 des Dämpfungselements 5 über die Außenfläche der Exzenterscheibe 32. die Außenfläche der Exzenterscheibe 32 stellt somit eine radiale Führung 30 für die erste Seite 51 des Dämpfungselements 5 bereit.

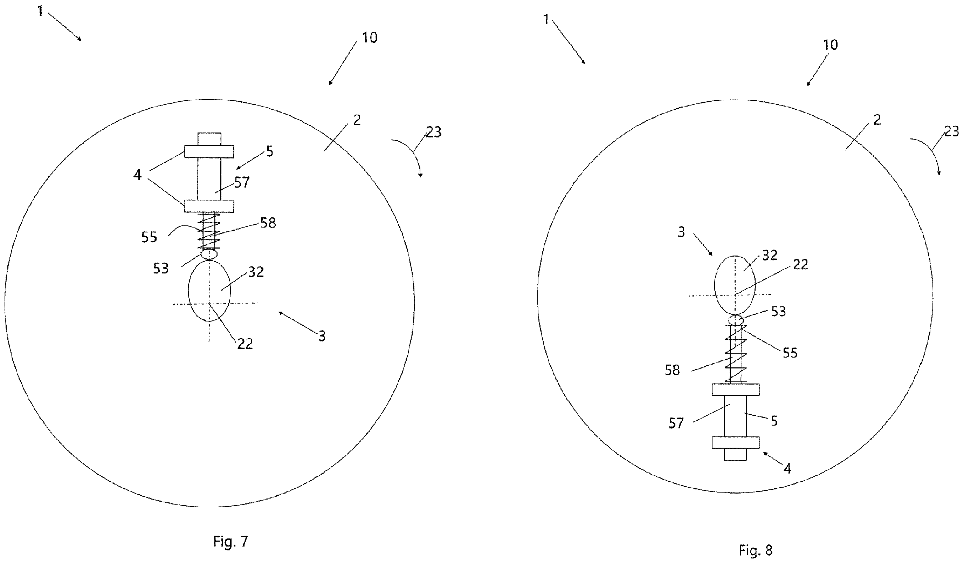

Wie Figur 7, welche schematisch eine Seitenansicht der Vorrichtung 1 aus Figur 6 zeigt, zu entnehmen, weist die Exzenterscheibe 32 bezogen auf die Drehachse 22 einen sich kontinuierlich verändernden Radius auf. Erfolgt eine Drehung des Rotationselements 10 um die Drehachse 22 aus der in Figur 7 gezeigten Stellung heraus, so erfährt das Dämpfungselement 5 aufgrund des geringer werdenden Radius der Exzenterscheibe 32 eine sukzessive Verlängerung bis zu einer maximalen Länge wie in Figur 8 gezeigt, welche schematisch eine weitere Seitenansicht der Vorrichtung 1 aus Figur 6 zeigt, bei welcher das Rotationselement 10 im Vergleich zu Figur 7 um 180° um die Drehachse 22 gedreht ist. Bei einem Weiterdrehen des Rotationselements 10 erfährt das Dämpfungselement 5 eine sukzessive Komprimierung bis zu einer minimalen Länge wie in Figur 7 gezeigt. Der vorgegebene Winkelabschnitt entspricht hier folglich einer vollen Umdrehung des Rotationselements 10, mithin eine Winkel von 360°.

Das Dämpfungselement 5 ist hierbei derart ausgebildet, dass zumindest bei einer Kompression des Dämpfungselements 5 eine Dämpfungskraft bereitgestellt wird.

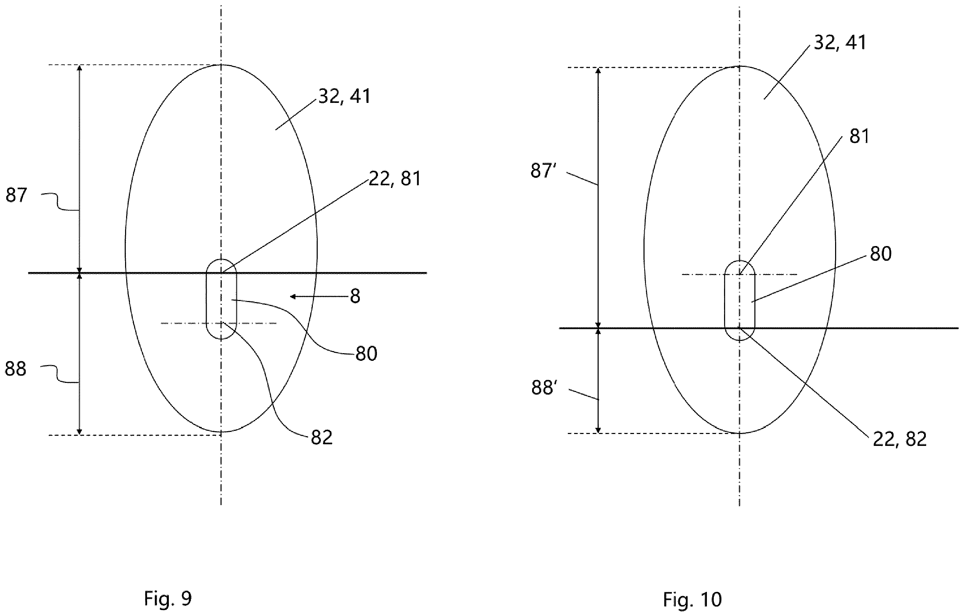

In Figur 9 ist eine Exzenterscheibe 32 entsprechend jener der Vorrichtung 1 aus den Figuren 6 bis 8 in einer schematischen Seitenansicht gezeigt. Die Exzenterscheibe der Figur 9 weist zusätzlich eine Einstelleinheit 8 auf, über welche die Ausprägung der Exzentrizität der Exzenterscheibe 32 relativ zur Drehachse 22 verstellbar ist. Hierzu weist die Einstelleinheit 8 ein Langloch 80 auf. Die Exzenterscheibe 32 ist durch das Langloch 80 verschiebbar an der Achse 20 angeordnet und kann entweder in einer ersten Position 81 oder in einer zweiten Position 82 arretiert werden. In Figur 9 ist die Exzenterscheibe 32 in der ersten Position 81 an der Achse 20 fixiert, so das die erste Position 81 und die Drehachse 22 zusammenfallen. Hierdurch ergibt sich ein erstes Paar an Hauptachsen-Abständen 87, 88, wobei die Differenz des größeren Hauptachsen-Abstands 87 zum kleineren Hauptachsen-Abstand 88 ein Maß für die Stärke der Exzentrizität der Exzenterscheibe 32 ist und somit ein Maß für die sich bei 1 Umdrehung der Exzenterscheibe 32 am Dämpfungselement 5 hervorgerufene Längenänderung.

Figur 10 zeigt die Exzenterscheibe 32 aus Figur 9, wobei die Exzenterscheibe 32 hier mit ihrer zweiten Position 82 auf Höhe der Drehachse 22 fixiert ist. Entsprechend ergibt sich ein zweites Paar von Hauptachsen-Abständen 87`, 88`. Die Differenz zwischen dem größeren Hauptachsen-Abstand 87' und dem kleineren Hauptachsen-Abstand 88 ist hierbei größer, als bei der in Figur 9 gezeigten Positionierung der Exzenterscheibe 32 relativ zur Drehachse 22. Mithin ist die bei einer Umdrehung der Exzenterscheibe 2 30 am Dämpfungselement 5 hervorgerufene Längenänderung bei der Positionierung der Exzenterscheibe 32 gemäß Figur 10 größer als bei der in Figur 9 gezeigten Positionierung der Exzenterscheibe 32. Bei gleicher Umdrehungsgeschwindigkeit des Rotationselements 10 ist somit eine maximale Geschwindigkeit der Längenänderung des Dämpfungselements 5 bei der in Figur 10 gezeigten Einstellung größer als die maximale Geschwindigkeit der Längenänderung des Dämpfungselements 5 bei der in Figur 9 gezeigten Einstellung. Hinsichtlich des Schwellenwerts der Geschicklichkeit der Längenänderung des Dämpfungselements 5 bedeutet dies, dass der Schwellenwert der Geschwindigkeit der Längenänderung bei der in Figur 10 gezeigten Einstellung bereits bei einer niedrigeren Umdrehungsgeschwindigkeit des Rotationselements 10 erreicht wird als bei der Einstellung gemäß Figur 9.

Die in Figuren 9 und 10 gezeigte Einstelleinheit 8 kann analog auch bei einer Exzenterscheibe 41 des Stützelements 4 vorgesehen sein.

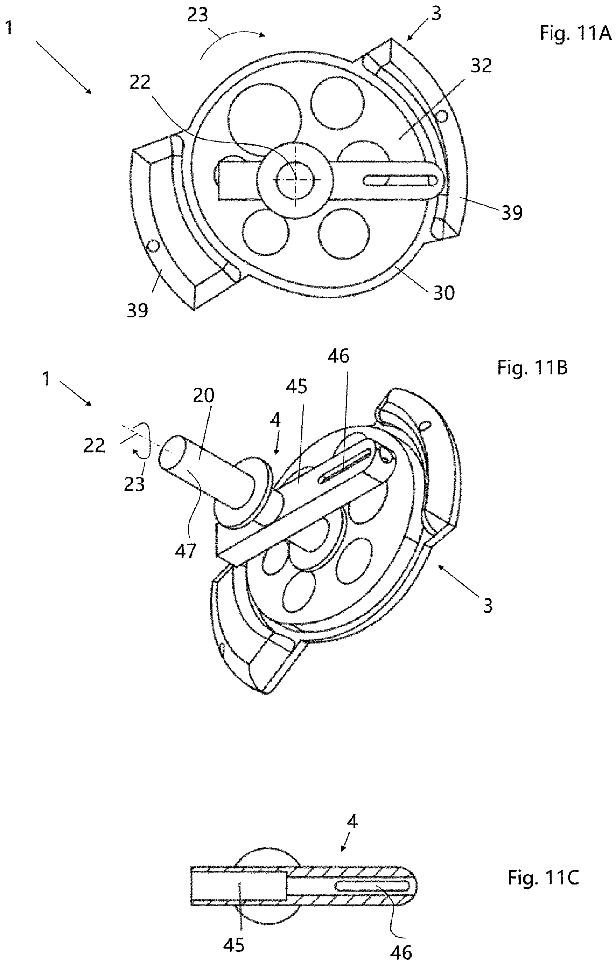

In den Figuren 11A und 11B ist schematisch eine Seitenansicht und eine perspektivische Seitenansicht einer Vorrichtung 1 zum Bremsen eines Rotationselements gemäß einer weiteren Ausführungsform gezeigt. Hier ist das Trägerelement 3 flanschartig geformt. Das Trägerelement 3 weist zwei sich gegenüberliegende Flansche 39 auf, mittels welchen das Trägerelement 3 an einen Trägerrahmen einer Rollvorrichtung angebracht werden kann. Das Trägerelement 3 weist ferner eine Exzenterscheibe 32 auf, welche derart in Bezug auf die Drehachse 22 geformt ist, dass in Umfangsrichtung 23 gesehen sich der Außenradius der Exzenterscheibe 32 in Bezug auf die Drehachse 22 von einem Minimalwert in den ersten 270° in Umfangsrichtung kontinuierlich zu einem Maximalwert vergrößert und sich anschließend in den darauffolgenden 90° in Umfangsrichtung wieder kontinuierlich zu dem Minimalwert reduziert. Dadurch ist ein vorgegebener Winkelabschnitt von 360° bereitgestellt. An dem Trägerelement 3 ist ein Stützelement 4 drehbar gelagert. Das Stützelement 4 weist eine drehbar an der Exzenterscheibe 32 gelagerte Achse 20 auf, welche die Drehachse 22 definiert.

Die Achse 20 weist einen Verbindungsabschnitt 47 auf, auf welchen eine Nabe eines Rotationselements aufgesteckt werden kann. Die dadurch entstehende Verbindung zwischen der Achse 20 und dem Rotationselement ist dabei derart ausgebildet, dass zwischen der Achse 20 und dem Rotationselement ein Drehmoment übertragbar ist. Hierzu können Verbindungsabschnitt 47 und Nabe eine Presspassung aufweisen. Alternativ kann auch eine Passfeder vorgesehen sein oder der Verbindungsabschnitt 44 ein Polygonprofil oder eine Verzahnung aufweisen.

An der Achse 20 ist ferner eine Dämpfungselement-Aufnahme 45 des Stützelements 4 starr befestigt. Die Dämpfungselement-Aufnahme 45 dreht sich aufgrund der starren Befestigung mit der Achse 20 und somit mit dem Rotationselement mit.

Wie insbesondere Figur 11C zu entnehmen, welche schematisch eine Schnittansicht durch die Aufnahme 45 zeigt, ist die Dämpfungselement-Aufnahme 45 ausgebildet, um ein Dämpfungselement 5 (hier nicht gezeigt) analog zur Ausführung in Figur 5 festlagernd aufzunehmen. Hierzu kann eine Aufnahme 57 des Dämpfungselements 5 in die Dämpfungselement-Aufnahme 45 eingeschoben werden. Der Kraftübertragungskörper 58 des Dämpfungselements 5 ist dabei derart orientiert, dass dessen Mitnehmerelement 53 an der Außenfläche der Exzenterscheibe 32 in Bezug auf die Drehachse 22 radial nach außen geführt ist. Eine Rückstellung des Kraftübertragungskörpers 58 in eine komprimierte Stellung des Dämpfungselements 5 ist durch den elastischen Schlauch 56 bereitgestellt. Um zu verhindern, dass während einer Umdrehung des Stützelements 4 relativ zum Trägerelement 3 von dem Mitnehmerelement 53 Querkräfte in den in der Aufnahme 57 angeordneten Wirkkörper (nicht gezeigt) übertragen werden, ist der Kraftübertragungskörper 58 quer zur Längsrichtung des Dämpfungselements 5 flexibel ausgebildet entsprechend der Ausführung in Figur 5. Damit das Mitnehmerelement 53 in Umfangsrichtung 23 gesehen relativ zur Aufnahme 45 in einer festen Position gehalten ist, weist das Stützelement 4 ferner eine als radiales Langloch in Bezug auf die Drehachse 22 ausgebildete Mitnehmerführung 46 auf, in welcher der Mitnehmer 53 des Dämpfungselements 5 in radialer Richtung geführt ist.

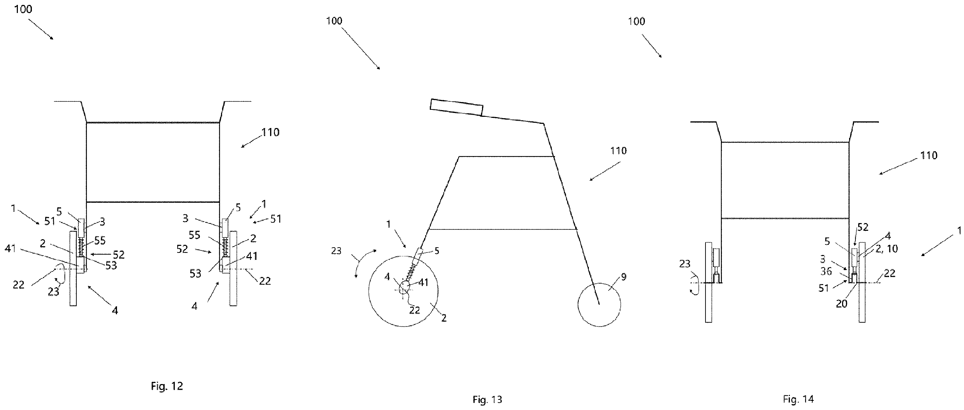

Figur 12 zeigt schematisch eine Rückansicht einer Rollvorrichtung 100 in Form eines Rollators, wobei beide hinteren Räder 2 des Rollators jeweils eine baugleich ausgebildete Vorrichtung 1 zum Bremsen des jeweiligen Rades 2 aufweisen. Die Vorrichtung 1 ist hierbei im Wesentlichen reziprok zur Ausbildung gemäß Figur 6 ausgebildet. Die erste Seite 51 des Dämpfungselements 5 ist über das Trägerelement 3 fest an dem Trägerrahmen 110 des Rollators befestigt. Jedes der hinteren Räder 2 weist ein Stützelement 4 mit einer Exzenterscheibe 41 auf, an welcher die zweite Seite 52 des Dämpfungselements 5 gleitend gelagert ist. Die Vorrichtung 1 weist analog zur Vorrichtung in Figur 6 eine Rückstelleinheit 55 in Form einer Druckfeder auf, welche ein Mitnehmerelement 53 gegen die Exzenterscheibe 41 des Stützelements 4 drückt. Die Vorrichtung 1 gemäß Figur 12 ist folglich in Form eines Kurvengetriebes ausgebildet.

Das Dämpfungselement 5 der Vorrichtungen 1 ist derart ausgebildet, dass es unterhalb eines vorgegebenen Schwellenwerts der Geschwindigkeit der Längenänderung des Dämpfungselements 5 eine erste Dämpfungskonstante aufweist, wobei die erste Dämpfungskonstante derart vorgegeben ist, dass eine Längenänderung im Wesentlichen nicht gedämpft wird, und das Dämpfungselement 5 ab dem Schwellenwert eine zweite Dämpfungskonstante aufweist, welche ein Dämpfen der Längenänderung bewirkt. Die zweite Dämpfungskonstante ist dabei derart bemessen, dass bei Überschreiten des vorgegebenen Schwellenwerts der Geschwindigkeit der Längenänderung die Längenänderung blockiert wird. Dadurch kann erzielt werden, dass die hinteren Räder 2 bei Überschreiten des Schwellenwerts blockieren, der Rollator mithin stehen bleibt.

Der Schwellenwert ist dabei derart bemessen, dass ein Bewegen des Rollators bis zu einer Geschwindigkeit von beispielsweise 1, 2, 3, 4, 5, 7, oder 10 km/h ohne Einschränkung möglich ist. Bei Überschreiten dieser Grenzgeschwindigkeit bewirkt die Umdrehungsgeschwindigkeit der hinteren Räder 2 aufgrund der Kinematik der Vorrichtung 1, dass der Schwellenwert überschritten wird und die Räder 2 blockieren. Ein Stolpern der den Rollator bewegenden Person erzeugt in der Regel einen Impuls auf den Rollator, derart dass die Grenzgeschwindigkeit und somit der Schwellenwert überschritten wird. Aufgrund des Überschreitens der Grenzgeschwindigkeit blockieren die hinteren Räder 2 des Rollators, sodass dieser ortsfest stehen bleibt und die stolpernde Person die Möglichkeit hat, sich auf dem Rollator abzustützen, ohne dass dieser Weg rollt. Hierdurch vermag ein Sturz der den Rollator bewegenden Person verhindert werden können.

In Figur 13 ist schematisch die Rollvorrichtung 100 in Form des Rollators aus Figur 12 in einer Seitenansicht gezeigt, in welcher die Exzenterscheibe 41 und ihre Anordnung relativ zur Drehachse 22 des hinteren Rades 2 als Draufsicht zu entnehmen ist. Die Vorderräder 9 des Rollators weisen keine Vorrichtung 1 auf. Alternativ können diese jedoch auch jeweils eine Vorrichtung 1 aufweisen.

Figur 14 zeigt schematisch eine Rückansicht einer Rollvorrichtung 100 in Form eines Rollators gemäß einer weiteren Ausführungsform. Die Rollvorrichtung 100 weist hier an ihren hinteren Rädern 2 jeweils eine Vorrichtung 1 zum Bremsen des jeweiligen Rades 2 gemäß Figur 4 auf. Wie in der Ausführung gemäß Figur 12 ist die Vorrichtung 1 hinsichtlich einer Mittelachse der Rollvorrichtung 100 in Bezug auf das Rad 2 innenliegend angeordnet, sodass die Vorrichtung 1 durch das Rad 2 geschützt ist.

Alternativ können die Vorrichtung 1 beziehungsweise die Rollvorrichtung 100 derart ausgebildet sein, dass in dem Winkelbereich 54 eine Mehrzahl von Bereichen mit steigendem Radius und sich daran anschließenden sinkendem Radius vorgesehen sind. Entsprechend liegt nicht nur eine Anstiegsphase pro Umdrehung vor, sondern eine Mehrzahl entsprechend der Mehrzahl von vorgenannten Bereichen, beispielsweise 2, 3, 4 oder 5. Dadurch kann die erforderliche Weglänge, bei welcher erforderliche Schwellenwert der Geschwindigkeit erreicht wird und welche einem Abrollweg des Rotationselements entspricht, im Vergleich zu einer Vorrichtung 1 mit lediglich einem Anstieg des Radius über den Umfang entsprechend der Anzahl von vorgenannten Bereichen verringert sein.

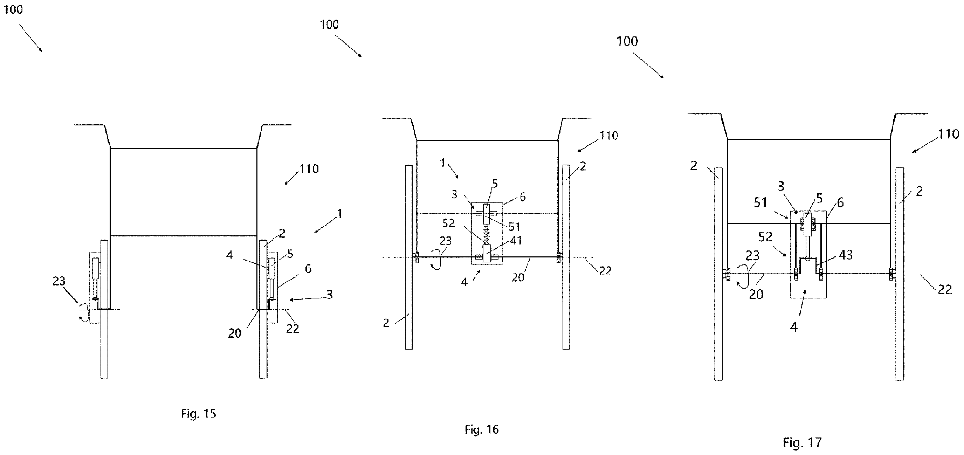

Figur 15 zeigt schematisch eine Rückansicht einer Rollvorrichtung 100 in Form eines Rollators gemäß einer weiteren Ausführungsform. Die Rollvorrichtung 100 entspricht im Wesentlichen jener aus Figur 14, wobei die Vorrichtung 1 hier in Bezug auf die Mittelachse der Rollvorrichtung 100 außen an dem Rad 2 angeordnet ist. Zum Schutze der Vorrichtung 1 weist diese ein die restlichen Teile der Vorrichtung 1 einhausendes Gehäuse 6 auf, welches fest an dem Rad 2 bzw. einer Felge des Rades 2 befestigt ist.

Figur 16 zeigt schematisch eine Rückansicht einer Rollvorrichtung 100 in Form eines Rollstuhls. Hier sind die hinteren Räder 2 fest an einer gemeinsamen Achse 20 angeordnet, welche in Umfangsrichtung 23 drehbar an einem Trägerrahmen 110 des Rollstuhls gelagert ist. An der Achse 20 ist ein Stützelement 4 befestigt, welches in Form einer starr an der Achse 20 befestigten Exzenterscheibe 41 ausgebildet ist, an welcher eine zweite Seite 52 des Dämpfungselements 5 der Vorrichtung 1 analog zur Ausführung in den Figuren 12 und 13 gleitend geführt ist. Die erste Seite 51 des Dämpfungselements 5 ist über ein Trägerelement 3 fest an dem Trägerrahmen 110 angebracht.

Entsprechend ist die Vorrichtung 1 im Wesentlichen analog zur in den Figuren 12 und 13 gezeigten Vorrichtung 1 ausgebildet. Anders als in den Figuren 12 und 13 weist die Rollvorrichtung 100 hier jedoch nicht für jedes der hinteren Räder 2 eine separate Vorrichtung 1 auf, sondern weist eine gemeinsame Vorrichtung 1 für beide über die Achse 20 rotativ verbundenen Räder 2 auf, welche beide hinteren Räder 2 simultan bremsen kann. Dadurch kann verhindert werden, dass die Räder 2 aufgrund des Vorsehens von unterschiedlich eingestellten oder aufgrund von Fertigungstoleranzen unterschiedliche Charakteristika aufweisende Dämpfungselementen 5 unterschiedlich beeinträchtigt werden, etwa da eines der Dämpfungselemente einen niedrigeren Schwellenwert oder eine höhere zweite Dämpfungskonstante aufweist. Die Vorrichtung 1 ist hierbei vorzugsweise mittig in der Rollvorrichtung angeordnet. Zum Schutze der Komponenten der Vorrichtung 1 weist diese ein ihre restlichen Komponenten einhausendes Gehäuse 6 auf.

Figur 17 zeigt eine weitere Rollvorrichtung 100 in Form eines Rollstuhls. Die Rollvorrichtung 100 ist im Wesentlichen analog zur in Figur 16 gezeigten Ausführungsform ausgebildet. Anstelle der Exzenterscheibe 41 weist das Stützelement 4 hierbei jedoch einen Exzenterabschnitt 43 an der gemeinsamen Achse 20 analog zur Ausbildung in Figur 4 auf. Ferner ist die erste Seite 51 des Dämpfungselements 5 an dem Trägerrahmen 110 drehgelagert und ist die zweite Seite 52 des Dämpfungselements 5 an dem Exzenterabschnitt 53 drehgelagert. Die Vorrichtung 1 ist folglich im Sinne eines Koppelgetriebes ausgebildet.

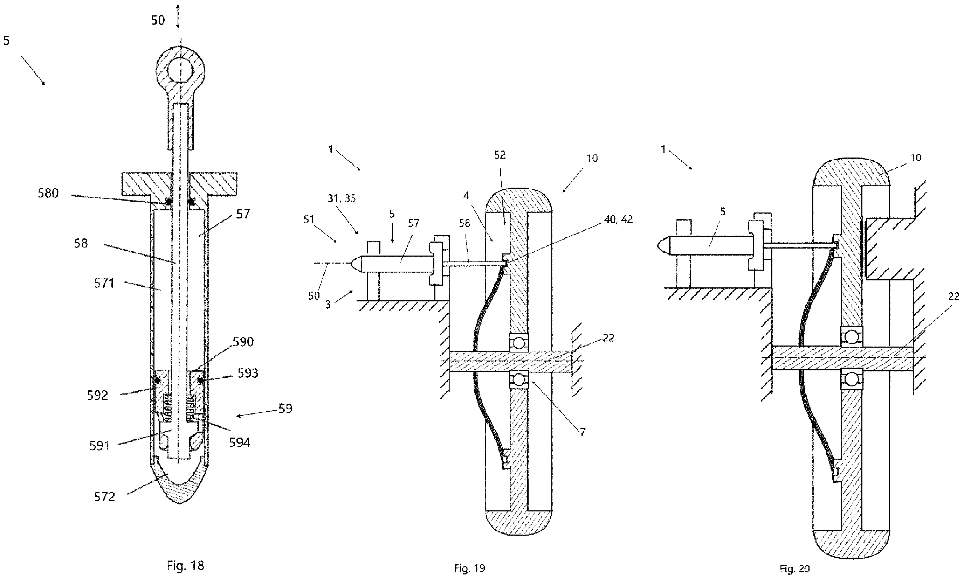

Figur 18 zeigt schematisch eine Schnittansicht durch ein Dämpfungselement 5 wie es beispielsweise in den Vorrichtungen 1 gemäß der Figuren 1-5 Einsatz finden kann.

Das Dämpfungselement 5 weist eine mit einem Füllmedium in Form eines inkompressiblen Fluids gefüllte Aufnahme 57 und einen in der Aufnahme 57 verschiebbar angeordneten Wirkkörper 59 zum Interagieren mit dem Füllmedium auf, wobei der Wirkkörper 59 mit einem Kraftübertragungskörper 58 zum Übertragen einer äußeren Kraft auf den Wirkkörper 59 verbunden ist.

Der Wirkkörper 59 weist einen ersten Körper 591 zum Interagieren mit dem Füllmedium und einen über ein Kopplungselement 594 in Form einer elastischen Druckfeder mit dem ersten Körper 591 elastisch gekoppelten zweiten Körper 592 auf, wobei der zweite Körper 592 eine Durchlassöffnung 590 aufweist, durch welche das Füllmedium strömen kann, und wobei der erste Körper 591 einen Ventilkörper bildet und der zweite Körper 902 einen Ventilsitz bildet, so das ein Fluss des Füllmediums durch die Durchlassöffnung 590 in Abhängigkeit von der Ventilstellung zugelassen oder unterbunden werden kann, wobei der zweite Körper 592 in Längsrichtung 50 relativ zum ersten Körper 591 verschiebbar ist.

Der zweite Körper 592 weist eine umlaufende Nut zur Aufnahme einer Dichtung 593 in Form eines O-Rings auf. Der zweite Körper 592 unterteilt einen Innenraum der Aufnahme 57 in eine erste Kammer 571 und eine zweite Kammer 572. Die Dichtung 593 verhindert, dass das Füllmedium entlang einer äußeren Umfangsoberfläche des zweiten Körpers 592 zwischen der ersten Kammer 571 und der zweiten Kammer 572 strömen kann.

Ist der zweite Körper 592 von dem Kopplungselement 594 in der in Figur 18 gezeigten, geöffneten Stellung gehalten, kann das Füllmedium durch die Durchlassöffnung 590 des zweiten Körpers 592 zwischen der ersten Kammer 571 und der zweiten Kammer 572 strömen. Entsprechend definiert die Durchlassöffnung 590 einen hydraulischen Durchmesser für das Füllmedium im Bereich des zweiten Körpers 592, welche eine erste Dämpfungskonstante des Dämpfungselements 5 prägt. Die in Figur 18 gezeigte Vorrichtung 1 ist auf Zugbelastungen ausgelegt. D.h., auf Belastungen, welche aus Expansion des Dämpfungselement 5 resultieren. Wird der Kraftübertragungskörper 58 entsprechend aus der Aufnahme 57 herausgezogen, so zieht es den ersten Körper 591 mit sich, wodurch dieser mittels des Kopplungselements 594 auf den zweiten Körper 592 drückt. Der Kraftübertragungskörper 58 erstreckt sich von dem ersten Körper 591 durch die Durchlassöffnung 590 des zweiten Körpers 592 und schließlich durch eine via einer Dichtung 573 abgedichteten Öffnung 574 der Aufnahme 57.

Bei einem Ausziehen des Kraftübertragungskörpers 58 aus der Aufnahme 57 wirkt auf den zweiten Körper 572 entsprechend seines Strömungswiderstands eine Widerstandskraft. Die Widerstandskraft wird von dem zweiten Körper 592 auf das Kopplungselement 594 übertragen. Im vorliegenden Fall unterliegt das Kopplungselement 594 einer Vorspannung, welche auf die Anordnung des ersten Körpers 591 relativ zum zweiten Körper 592 zurückzuführen ist. Die Federstärke des Kopplungselements 594 sowie eine in der Ausgangsposition gemäß Figur 18 gezeigte Anfangsstauchung des Kopplungselements 594 sind derart gewählt, dass das vorgespannte Kopplungselement 594 erst beim Erreichen eines Schwellwerts der auf den zweiten Körper 592 wirkenden Widerstandskraft einfedert. Bei einer Widerstandskraft unterhalb des Schwellwerts findet keine Relativbewegung zwischen dem ersten Körper 591 und dem zweiten Körper 592 statt. Bei einer Widerstandskraft oberhalb des Schwellwerts beginnt das Koppelelement 594 einzufedern, wodurch sich der erste Körper 591 auf den zweiten Körper 592 zu bewegt, bis die Durchlassöffnung 590 vollständig geschlossen ist. In diesem Zustand beträgt der hydraulische Durchmesser des Dämpfungselements 5 im Wesentlichen Null. Somit ist im Wesentlichen kein hydraulischer Durchmesser mehr vorhanden, durch den das Füllmedium zwischen der ersten Kammer 571 und der zweiten Kammer 572 strömen kann. Durch die Wahl von vergleichsweise geringen Federstärken lässt sich in Kombination mit der Vorspannung des Kopplungselements 594 eine vergleichsweise schnelle Reaktionszeit des Dämpfungselements 5, d. h. ein schnelles Schließen der Durchlassöffnung 590 realisieren. Ein Strömen des Füllmediums von der ersten Kammer 571 in die zweite Kammer 572 ist nicht länger möglich, sodass die beiden Auszugskörper 591, 592 nicht länger relativ zur Aufnahme 57 bewegt werden können. In diesem Zustand lässt das Dämpfungselement 5 keine weitere Längenänderung zu. Eine daraus resultierende zweite Dämpfungskonstante tendiert somit gegen unendlich. Beispielsweise kann der Schwellwert 4,5 N betragen und das System bei einem Sprung einer Widerstandskraft von 4,5 N auf 5 N sofort vollständig schließen.

Alternativ kann auch keine Dichtung 593 vorgesehen sein oder Dichtung 593 derart ausgebildet sein, sodass neben der Durchlassöffnung 590 eine weitere Durchlassöffnung zwischen der Innenwand der Aufnahme 57 und der Mantelfläche des zweiten Körpers 592 bereitsteht, welche stets offen ist. Durch die Wahl der Querschnitte der Durchlassöffnung 590 und der weiteren Durchlassöffnung und deren Verhältnis zueinander kann so eine erste Dämpfungskonstante und eine dazu unterschiedliche zweite Dämpfungskonstante vorgegeben werden.

Der Schwellenwert der Geschwindigkeit der Längenänderung des Dämpfungselements 5 korrespondiert dabei mit dem Schwellwert, bei welchem die Widerstandskraft des Kopplungselements 594 überwunden und dadurch ein Schließen des vorbeschriebenen Ventils, umfassend den ersten Körper 591 und den zweiten Körper 592, induziert wird.

Figur 19 zeigt schematisch eine Schnittansicht einer Vorrichtung 1 zum Bremsen eines Rotationselements 10 gemäß einer weiteren Ausführungsform. Die Vorrichtung 1 entspricht in großen Teilen der Vorrichtung 1 aus Figur 1, unterscheidet sich jedoch dahingehend, dass das Dämpfungselement 5 im Vergleich zu Figur 1 in einer um 90° gedrehten Ausrichtung angeordnet ist. Mit anderen Worten ist die Längsrichtung 50 parallel zur Drehachse 22 orientiert. Entsprechend ist der Kraftübertragungskörper 58 in einer Führungsnut 42 der Führung 40 geführt, welche in Bezug zur Drehachse 22 über den Umfang des Rotationselements 10 einen gleichbleibenden Radius aufweist. Um eine Bewegung des Kraftübertragungskörpers 58 zu generieren, weist die Führungsnut 58 in Richtung der Drehachse 22 eine Hubkurve auf. Mit anderen Worten variiert der Abstand zwischen Aufnahme 57 beziehungsweise Trägerelement 3 und der Führungsnut 42 bei einer Umdrehung des Rotationselements 10 aufgrund des Höhenprofils der Hubkurve in Richtung der Drehachse 22.

Figur 20 zeigt schematisch eine Schnittansicht einer Vorrichtung 1 zum Bremsen eines Rotationselements 10 gemäß einer weiteren Ausführungsform. Die Vorrichtung 1 entspricht im Wesentlichen jener aus Figur 19, wobei das Rotationselement 10 hier parallel zur Drehachse 22 über einen vorgegebenen Bereich verschiebbar ausgebildet ist. Im Falle eines Überschreitens des Schwellenwerts, welches als "Auslösen" des Dämpfungselements 5 verstanden werden kann, schiebt die Dämpfungselement bei einer Rotation des Rotationselements 10 aufgrund der Hubkurve in Richtung einer gegenüber dem Dämpfungselement 5 angeordneten zusätzlichen Bremse 11, welche dann aufgrund einer Reibung zwischen korrespondierenden Bremsflächen, welche in Figur 20 als breite Linien dargestellt sind, eine Bremswirkung auf das Rotationselement 10 erzeugt. Die zusätzliche Bremse 11 unterstützt oder übernimmt gar gänzlich ein Bremsen des Rotationselements 10.

Alternativ kann das Rotationselement 10 auch eine vorgegebene Elastizität aufweisen, derart dass das "Auslösen" des Dämpfungselements 5 das Rotationselement zumindest im Bereich der zusätzlichen Bremse elastisch verformt, und so die oben beschriebene Bremswirkung erzielt werden kann.

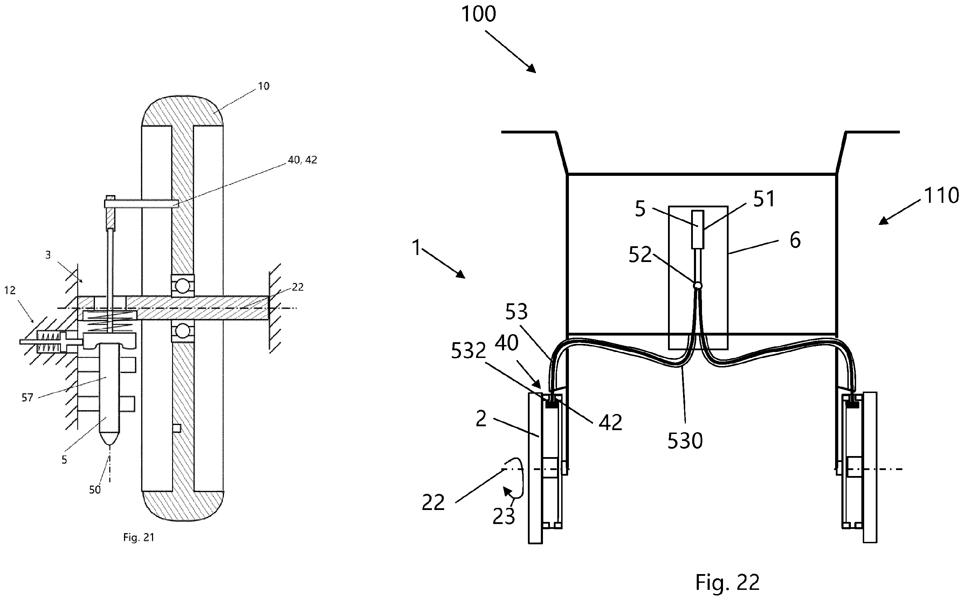

Figur 21 zeigt schematisch eine Schnittansicht einer Vorrichtung 1 zum Bremsen eines Rotationselements 10 gemäß einer weiteren Ausführungsform. Die Vorrichtung 1 entspricht im Wesentlichen jener aus Figur 1, wobei das Dämpfungselement 5 am Trägerelement 3 in einer vorgespannten Stellung in Längsrichtung 50 in der in Figur 21 gezeigten Stellung vorgespannt ist. Oberhalb des Schwellenwerts erfährt die Aufnahme 57 eine Kraft, welche entgegen der Vorspannung gerichtet ist und welche größer ist als die Vorspannkraft, welche das Dämpfungselement 5 in der vorgespannten Position hält. Entsprechend wird die Aufnahme 57 aus der in Figur 21 gezeigten Position in Längsrichtung 50 verschoben, so dass ein gegen die Aufnahme 57 vorgespannter, parallel zur Drehachse 22 orientierter Auslöser 12 in Richtung der Aufnahme 57 bewegt wird. Der Auslöser 12 ist mit einer Feststellbremse des Rotationselements 10 (nicht gezeigt) wirkgekoppelt, welche durch die Bewegung des Auslösers 12 aus seiner in Figur 21 gezeigten Position ausgelöst wird und eine Feststellung des Rotationskörpers 10 erzeugt. Alternativ kann statt der Feststellbremse auch eine zusätzliche Bremse, welche lediglich ein zusätzliches Bremsen ähnlich wie hinsichtlich Figur 20 beschrieben vorgesehen sein.

Als Feststellbremse kann eine an einer Rollvorrichtung, beispielsweise einem Kinderwagen, ohnehin vorhandene Feststellbremse verwendet werden.

Figur 22 zeigt eine schematisch eine weitere Rollvorrichtung 100 in Form eines Kinderwagens. Entsprechend den Figuren 16 und 17 ist zum Bremsen der Rotationsbewegung sowohl des linken hinteren Rades 2 (in Figur 22 links) sowie des rechten hinteren Rades 2 (in Figur 22 rechts) ein gemeinsames Dämpfungselement 5 vorgesehen, welches mit seiner ersten Seite 51 am Trägerrahmen 110 der Rollvorrichtung fixiert ist.

In dieser Ausführungsform erstreckt sich jeweils ein Mitnehmerelement 53 zu jeweils einem der beiden Räder 2. Das Mitnehmerelement 53 ist zugsteif und biegeweich in Form eines Bowdenzuges ausgebildet. Jedes der Mitnehmerelemente 53 in Form des Bowdenzuges ist optional in einer entsprechenden Zughülle 530 geführt. Am dem Dämpfungselement 5 abgewandten Ende weist jedes Mitnehmerelement 53 einen Nippel, vorzugsweise einen Tonnennippel oder einen Birnennippel auf, welcher in einer radial ausgebildeten T-förmigen Führungsnut 42 der Führung 40 radial geführt ist. Das Dämpfungselement 5 in dessen Extensionsrichtung ab einen vorgegebenen Schwellenwert eine Dämpfungskraft bereit und ist in Kompressionsrichtung vorgespannt, so dass das Dämpfungselement 5 in die komprimierte Stellung vorgespannt ist.

Die Führungsnut 42 hat über den Umfang des Rades 2 gesehen einen sich ändernden Radius in Bezug auf die Drehachse 22 ähnlich der Ausführungsformen beispielweise der Figuren 1, 2, oder 9 - 11B. Entsprechend erfährt der Nippel 532 durch die Führung 40 in radialer eine Änderung seines Abstands in Bezug auf die Drehachse 22. Entsprechend wird bei sich verringerndem Abstand über das Mitnehmerelement 53 auf die zweite Seite 52 eine Zugkraft übertragen und das Dämpfungselement 5 telekopiert. Übersteigt die Geschwindigkeit der dadurch hervorgerufenen Längenänderung des Dämpfungselements 5 den vorgegebenen Schwellenwert des Dämpfungselements 5, so kommt es analog zu den vorbeschriebenen Ausführungsformen zu einem Abbremsen der Rotationsbewegung der Räder 2.

Alternativ könnten auch für jedes Rad 2 ein eigenes Dämpfungselement 5 beziehungsweise zwei separate Vorrichtungen 1 vorgesehen sein.

Soweit anwendbar, können alle einzelnen Merkmale, die in den Ausführungsbeispielen dargestellt sind, miteinander kombiniert und/oder ausgetauscht werden, ohne den Bereich wie in den definierten Ansprüchen der Erfindung zu verlassen.

**Bezugszeichenliste**

| | | | |
|---|---|---|---|
| 1 | Vorrichtung | 532 | Nippel |
| 2 | Rad | 54 | Winkelabschnitt |
| 20 | Achse | 55 | Rückstelleinheit |
| 22 | Drehachse | 56 | Schlauch |
| 23 | Umfangsrichtung | 57 | Aufnahme |
| 24 | Felge | 571 | Erste Kammer |
| | | 572 | Zweite Kammer |
| 3 | Trägerelement | 58 | Kraftübertragungskörper |
| 30 | Führung | 580 | Dichtung |
| 31 | Festlager | 59 | Wirkkörper |
| 32 | Exzenterscheibe | 590 | Durchlassöffnung |
| 33 | Führungsnut | 591 | Erster Körper |
| 34 | Drehlagerung | 592 | Zweiter Körper |
| 35 | Dämpfungselement-Aufnahme | 593 | Dichtung |
| 36 | Exzenterabschnitt | 594 | Kopplungselement |
| 37 | Drehlagerungsachse | | |
| 38 | Abstand | 6 | Gehäuse |
| 39 | Flansch | 7 | Kugellager |
| 4 | Stützelement | 8 | Einstelleinheit |
| 40 | Führung | 80 | Langloch |
| 41 | Exzenterscheibe | 81 | Erste Lagerposition |
| 42 | Führungsnut | 82 | Zweite Lagerposition |
| 43 | Exzenterabschnitt | 83 | Verbindungsabschnitt |
| 44 | Drehlagerung | 84 | Querrichtung |
| 45 | Dämpfungselement-Aufnahme | 85 | Schaltelement |
| 46 | Mitnehmerführung | 86 | Durchgangsöffnung |
| 47 | Verbindungsabschnitt | 87 | Größerer Hauptachsen-Abstand |
| | | 88 | Kleinerer Hauptachsen-Abstand |
| 5 | Dämpfungselement | | |
| 50 | Längsrichtung | 9 | Vorderrad |
| 51 | erste Seite | 10 | Rotationselement |
| 52 | Zweite Seite | 11 | Zusätzliche Bremse |
| 53 | Mitnehmerelement | 12 | Auslöser |
| 530 | Zughülle | 100 | Rollvorrichtung |
| | | 110 | Trägerrahmen |

## Patentansprüche

1. Vorrichtung (1) zum Bremsen einer Rotationsbewegung eines Rotationselementes (10), bevorzugt eines Rades (2), besonders bevorzugt eines Rades an einem Rollator, Gehwagen, Kinderwagen, Rollstuhl, Lauflernwagen, Lauffrahrrad oder Spielgerät, umfassend
ein Trägerelement (3) zum Abstützen gegen eine Achse (20) eines Rotationselements (10) oder einen das Rotationselement (10) tragenden Trägerrahmen (110),
ein um eine Drehachse (22) relativ zum Trägerelement (3) drehbares Stützelement (4) zum kraftübertragenden Anbinden an das Rotationselement (10),
**dadurch gekennzeichnet, dass** die Vorrichtung
ein sich zwischen dem Trägerelement (3) und dem Stützelement (4) erstreckendes Dämpfungselement (5), umfasst,
wobei das Dämpfungselement (5) dazu eingerichtet ist, eine einer Längenänderung des Dämpfungselements (5) entgegengerichteten Dämpfungskraft bereitzustellen, deren Höhe abhängig ist von der Geschwindigkeit der Längenänderung, wobei
eine erste Seite (51) des Dämpfungselements (5) derart an dem Trägerelement (3) gelagert ist und eine relativ zur ersten Seite (51) längsverschiebbare zweite Seite (52) des Dämpfungselements (5) derart an dem Stützelement (4) gelagert ist, dass
eine Drehung des Stützelements (4) um die Drehachse (22) zumindest in einem vorgegebenen Winkelabschnitt (54) in Umfangsrichtung (23) bezogen auf die Drehachse (22) eine Längenänderung des Dämpfungselements (5) bewirkt, und eine im Dämpfungselement (5) erzeugte Dämpfungskraft ein Bremsen der Drehung des Stützelements (4) bewirkt.

2. Vorrichtung (1) gemäß Anspruch 1, wobei das Dämpfungselement (5), bevorzugt unterhalb eines vorgegebenen Schwellenwerts der Geschwindigkeit der Längenänderung, eine erste Dämpfungskonstante aufweist, wobei die erste Dämpfungskonstante bevorzugt derart vorgegeben ist, dass eine Längenänderung im Wesentlichen nicht gedämpft wird, und das Dämpfungselement (5) ab dem Schwellenwert eine zweite Dämpfungskonstante aufweist, welche ein Dämpfen der Längenänderung bewirkt.

3. Vorrichtung gemäß Anspruch 2, wobei das Dämpfungselement (5) derart ausgebildet ist, dass bei Überschreiten des vorgegebenen Schwellenwerts der Geschwindigkeit der Längenänderung die Längenänderung blockiert wird.

4. Vorrichtung (1) gemäß einem der vorstehenden Ansprüche, wobei das Stützelement (4) eine Führung (40) für die zweite Seite (52) des Dämpfungselements (5) bereitstellt, wobei das Dämpfungselement (5) auf der zweiten Seite (52) ein Mitnehmerelement (53) aufweist, welches an dem Stützelement (4) gleitgelagert und/oder rollengelagert ist, und das Dämpfungselement (5) auf der ersten Seite (51) an dem Trägerelement (3) festgelagert ist.

5. Vorrichtung (1) gemäß einem der Ansprüche 1 bis 4, wobei das Trägerelement (3) eine Führung (30) für die erste Seite (51) des Dämpfungselements (5) bereitstellt, wobei das Dämpfungselement (5) auf der ersten Seite (51) ein Mitnehmerelement (53) aufweist, welches an dem Trägerelement (3) gleitgelagert und/oder rollengelagert ist, und das Dämpfungselement (5) auf der zweiten Seite (52) an dem Stützelement (4) festgelagert ist.

6. Vorrichtung (1) gemäß einem der Ansprüche 4 oder 5, wobei die Führung (30, 40) in Form einer exzentrisch zur Drehachse (22) angeordneten Exzenterscheibe (32, 41) ausgebildet ist.

7. Vorrichtung (1) gemäß einem der Ansprüche 4 bis 6, wobei die Führung (30, 40) in Form einer sich im Wesentlichen in Umfangsrichtung (23) erstreckenden Führungskurve, bevorzugt einer Führungsnut (33, 42), ausgebildet ist, wobei die Führungskurve in Umfangsrichtung (23) bezogen auf die Drehachse (22) zumindest im vorgegebenen Winkelabschnitt (54) einen sich kontinuierlich verändernden Führungsradius aufweist, wobei bevorzugt der Führungsradius im Umfangsabschnitt (23) sich von einen Grundwert auf einen davon verschiedenen Exzenterwert und wieder zurück auf den Grundwert verändert, wobei bevorzugt der vorgegebene Winkelabschnitt (54) sich im Wesentlichen über den gesamten Umfang (23) erstreckt.

8. Vorrichtung (1) gemäß einem der Ansprüche 4 bis 7, wobei die Festlagerung eine Dämpfungselement-Aufnahme (35, 45) aufweist, wobei das Dämpfungselement (5) mit einer Seite (51, 52) in der Dämpfungselement-Aufnahme (35, 45) befestigbar ist, wobei die Dämpfungselement-Aufnahme (34, 45) bevorzugt eine Mitnehmerführung (46) zum Führen, bevorzugt zum radialen Führen, eines Mitnehmerelements (53) der anderen Seite (52, 51) des Dämpfungselements (5) aufweist.

9. Vorrichtung (1) gemäß dem vorstehenden Anspruch, wobei das Trägerelement (3) die Dämpfungselement-Aufnahme (35) aufweist, wobei die Dämpfungselement-Aufnahme (35) bevorzugt an einer feststehenden Achse (20) des Trägerelements (3) befestigt ist.

10. Vorrichtung (1) gemäß Anspruch 8, wobei das Stützelement (4) die Dämpfungselement-Aufnahme (45) aufweist, wobei das Stützelement (4) bevorzugt in Form einer Felge (24) des Rotationselements (10), bevorzugt des Rades (2), ausgebildet ist, wobei die Dämpfungselement-Aufnahme (45) bevorzugt in einer Speiche der Felge (24) integriert ist.

11. Vorrichtung (1) gemäß einem der Ansprüche 1 bis 3, **dadurch gekennzeichnet, dass** das erste Ende (51) des Dämpfungselements (5) an dem Trägerelement (3) festgelagert oder drehgelagert ist, wobei das Trägerelement (3) ausgebildet ist, um an der Achse (20) oder dem Trägerrahmen (110) fixiert zu werden, und das zweite Ende (52) des Dämpfungselements (5) an dem Stützelement (4) drehgelagert ist, wobei das Stützelement (4) ausgebildet ist, um an dem Rotationselement (10) beabstandet von der Drehachse (22) fixiert zu werden.

12. Vorrichtung (1) gemäß einem der vorstehenden Ansprüche, wobei das Dämpfungselement (5) eine mit einem Füllmedium gefüllte Aufnahme (57) und einen in der Aufnahme (57) verschiebbar angeordneten Wirkkörper (59) zum Interagieren mit dem Füllmedium aufweist, wobei der Wirkkörper (59) mit einem Kraftübertragungskörper (58) zum Übertragen einer äußeren Kraft auf den Wirkkörper (59) verbunden ist.

13. Vorrichtung (1) gemäß einem der vorstehenden Ansprüche, ferner umfassend eine Einstelleinheit (8), welche ausgebildet ist zum Verstellen der resultierenden Größe der durch eine Drehung des Stützelements (4) um die Drehachse (22) erzeugten Längenänderung des Dämpfungselements (5) im vorgegebenen Winkelabschnitt (54), zum Verstellen einer Dämpfungskonstante des Dämpfungselements (5), und/oder zum Ausschalten und/oder Auskoppeln des Dämpfungselements (5).

14. Vorrichtung (1) gemäß einem der vorstehenden Ansprüche, ferner umfassend eine Feststellbremse für das Rotationselement (10), derart ausgebildet, so dass bei Erreichen eines vorgegebenen Grenzwerts einer durch das Dämpfungselement (5) erzeugten Dämpfungskraft die Feststellbremse aktiviert wird, wobei die Feststellbremse bevorzugt derart ausgebildet ist, so dass das Rotationselement (10) ein kontinuierliches Abbremsen bis zum Stillstand erfährt, wobei eine Höhe der durch die Feststellbremse auf das Rotationselement (10) wirkenden Abbremskraft bevorzugt vorgegeben und/oder einstellbar ist.

15. Rollvorrichtung (100), bevorzugt Rollator, Gehwagen, Kinderwagen, Rollstuhl, Lauflernwagen, Lauffahrrad oder Spielgerät, Fahrradanhänger, Schubkarre, insbesondere Schubkarre für den Bau, Servierwagen, insbesondere für Flugzeug, Bahn oder Schiff, oder Gepäckwagen, umfassend einen Trägerrahmen (110) und eine Mehrzahl von an dem Trägerrahmen (110) drehbar angeordneter Räder (2, 9),
**dadurch gekennzeichnet, dass**
zumindest eine Vorrichtung (1) gemäß einem der vorstehenden Ansprüche zum Bremsen eines Rades (2, 9) der Mehrzahl von Rädern (2, 9) zwischen dem zu bremsenden Rad (2, 9) und dem Trägerrahmen (110) angeordnet ist.

## Claims

1. Device (1) for braking a rotation movement of a rotation element (10), preferably a wheel (2), particularly preferably a wheel on a rollator, walker, pram, wheelchair, baby walker, running bike or play equipment, comprising
a carrier element (3) for supporting against an axis (20) of a rotation element (10) or a carrier frame (110) supporting the rotation element (10),
a support element (4) rotatable about an axis of rotation (22) relative to the carrier element (3) for force-transmitting connection to the rotation element (10),
**characterised in that** the device
comprises a damping element (5) extending between the carrier element (3) and the support element (4),
wherein the damping element (5) is arranged to provide a damping force opposing a change in length of the damping element (5), the height of which is dependent on the speed of the change in length,
wherein a first side (51) of the damping element (5) is mounted in such a way on the carrier element (3) and a second side (52) of the damping element (5), which is longitudinally displaceable relative to the first side (51), is mounted on the support element (4) in such a way that
a rotation of the support element (4) around the axis of rotation (22) causes a change in length of the damping element (5) at least in a predetermined angle section (54) in the circumferential direction (23) with respect to the axis of rotation (22), and a damping force generated in the damping element (5) causes a braking of the rotation of the support element (4).

2. Device (1) according to claim 1, wherein the damping element (5), preferably below a predetermined threshold value of the speed of the length change, has a first damping constant, wherein the first damping constant is preferably predetermined in such a way that a length change is substantially not damped, and the damping element (5) above the threshold value has a second damping constant which causes a damping of the length change.

3. Device according to claim 2, wherein the damping element (5) is designed in such a way that when the predetermined threshold value of the speed of the length change is exceeded, the length change will be blocked.

4. Device (1) according to one of the preceding claims, wherein the support element (4) provides a guide (40) for the second side (52) of the damping element (5), wherein the damping element (5) shows a driver element (53) on the second side (52) which is slide-mounted and/or roller-mounted on the support element (4), and the damping element (5) is fixed-mounted on the first side (51) on the carrier element (3).

5. Device (1) according to one of claims 1 to 4, wherein the carrier element (3) provides a guide (30) for the first side (51) of the damping element (5), wherein the damping element (5) has a driver element (53) on the first side (51) which is slide-mounted and/or roller-mounted on the carrier element (3), and the damping element (5) is fixed-mounted on the second side (52) on the support element (4).

6. Device (1) according to one of claims 4 or 5, wherein the guide (30, 40) is formed in the shape of an eccentric disc (32, 41) arranged eccentrically to the axis of rotation (22).

7. Device (1) according to one of claims 4 to 6, wherein the guide (30, 40) is formed in the shape of a guide curve, preferably a guide groove (33, 42), extending substantially in the circumferential direction (23), wherein the guide curve shows a continuously changing guide radius in the circumferential direction (23) relative to the axis of rotation (22) at least in the predetermined angle section (54), wherein the guide radius in the circumferential section (23) preferably changes from a basic value to an eccentric value different therefrom and back again to the basic value, wherein preferably the predetermined angle section (54) extends substantially over the entire circumference (23).

8. Device (1) according to one of claims 4 to 7, wherein the fixed bearing shows a damping element receptacle (35, 45), wherein the damping element (5) can be fastened with one side (51, 52) in the damping element receptacle (35, 45), wherein the damping element receptacle (34, 45) preferably shows a driver guide (46) for guiding, preferably for radially guiding a driver element (53) of the other side (52, 51) of the damping element (5).

9. Device (1) according to the preceding claim, wherein the carrier element (3) comprises the damping element receptacle (35), wherein the damping element receptacle (35) is preferably fixed to a fixed axis (20) of the carrier element (3).

10. Device (1) according to claim 8, wherein the support element (4) comprises the damping element receptacle (45), wherein the support element (4) is preferably formed in the shape of a rim (24) of the rotation element (10), preferably of the wheel (2), wherein the damping element receptacle (45) is preferably integrated in a spoke of the rim (24).

11. Device (1) according to one of claims 1 to 3, **characterised in that** the first end (51) of the damping element (5) is fixed or pivoted to the carrier element (3), wherein the carrier element (3) is formed to be fixed to the axis (20) or the carrier frame (110), and the second end (52) of the damping element (5) is pivoted to the support element (4), wherein the support element (4) is configured to be fixed to the rotation element (10) spaced from the axis of rotation (22).

12. Device (1) according to one of the preceding claims, wherein the damping element (5) shows a receptacle (57) filled with a filling medium and an active body (59) arranged displaceably in the receptacle (57) for interacting with the filling medium, wherein the active body (59) being connected to a force-transmitting body (58) for transmitting an external force to the active body (59).

13. Device (1) according to one of the preceding claims, further comprising an adjusting unit (8) configured to adjust the resultant magnitude of the change in length of the damping element (5) produced by a rotation of the support element (4) about the axis of rotation (22) in the predetermined angle section (54), to adjust a damping constant of the damping element (5), and/or to turn off and/or uncouple the damping element (5).

14. Device (1) according to one of the preceding claims, further comprising a parking brake for the rotation element (10), configured in such a way that the parking brake is activated when a predetermined limit value of a damping force generated by the damping element (5) is reached, wherein the parking brake preferably is configured in such a way that the rotation element (10) undergoes continuous braking until it comes to a standstill, wherein a height of the braking force acting on the rotation element (10) by the parking brake preferably being predetermined and/or adjustable.

15. Rolling device (100), preferably a rollator, walker, pram, wheelchair,
baby walker, running bike or play equipment, bicycle trailer, wheelbarrow, in particular wheelbarrow for construction, serving trolley, in particular for aeroplane, train or ship, or luggage trolley, comprising a carrier frame (110) and a plurality of wheels (2, 9) rotatably arranged on the carrier frame (110),
**characterised in that**
at least one device (1) according to one of the preceding claims for braking a wheel (2, 9) of the plurality of wheels (2, 9) is arranged between the wheel (2, 9) to be braked and the carrier frame (110).

## Revendications

1. Dispositif (1) pour freiner un mouvement de rotation d'un élément rotatif (10), de préférence d'une roue (2), notamment de préférence d'une roue sur un déambulateur, un véhicule pédestre, une poussette, un fauteuil roulant, un chariot de marche, un vélo de course ou un appareil de jeu, comprenant
un élément porteur (3) destiné à s'appuyer contre un axe (20) d'un élément rotatif (10) ou un cadre porteur (110) portant l'élément rotatif (10),
un élément de support (4) pouvant tourner autour d'un axe de rotation (22) relatif à l'élément de support (3) pour l'attacher à l'élément de rotation (10) en transmettant les forces,
**caractérisé en ce que** le dispositif comprenant
un élément d'amortissement (5) s'étendant entre l'élément porteur (3) et l'élément de support (4),
ledit l'élément d'amortissement (5) étant conçu pour fournir une force d'amortissement opposée à une variation de longueur de l'élément d'amortissement (5), dont la valeur dépend de la vitesse de la variation de longueur,
ledit un premier côté (51) de l'élément d'amortissement (5) est monté de telle sorte sur l'élément porteur (3) et un deuxième côté (52) de l'élément d'amortissement (5), déplaçable longitudinalement par rapport au premier côté (51), est monté sur l'élément de support (4) de telle sorte qu'
une rotation de l'élément de support (4) autour de l'axe de rotation (22) provoque une modification de la longueur de l'élément d'amortissement (5) au moins dans une section d'angle (54) prédéfinie dans la section de périmètre (23) par rapport à l'axe de rotation (22), et une force d'amortissement générée dans l'élément d'amortissement (5) provoque un freinage de la rotation de l'élément de support (4).

2. Dispositif (1) selon la revendication 1, ledit l'élément d'amortissement (5) présente, de préférence en dessous d'une valeur seuil prédéfinie de la vitesse de la variation de longueur, ayant une première constante d'amortissement, ledit la première constante d'amortissement étant de préférence prédéfinie de telle sorte qu'une variation de longueur n'est essentiellement pas amortie, et l'élément d'amortissement (5) ayant, à partir de la valeur seuil, une deuxième constante d'amortissement qui provoque un amortissement de la variation de longueur.

3. Dispositif selon la revendication 2, ledit l'élément d'amortissement (5) est conçu de telle sorte que, lorsque la vitesse de la variation de longueur dépasse la valeur de seuil prédéterminée, la variation de longueur est bloquée.

4. Dispositif (1) selon l'une des revendications précédentes, ledit l'élément de support (4) fournit un guide (40) pour le deuxième côté (52) de l'élément d'amortissement (5), ledit l'élément d'amortissement (5) présente un élément conducteur (53) sur le deuxième côté (52) qui est monté sur glissières et/ou sur rouleaux sur l'élément de support (4), et l'élément d'amortissement (5) étant monté fixement sur le premier côté (51) sur l'élément porteur (3).

5. Dispositif (1) selon l'une des revendications 1 à 4, ledit l'élément porteur (3) fournit un guide (30) pour le premier côté (51) de l'élément d'amortissement (5), ledit l'élément d'amortissement (5) présente sur le premier côté (51) un élément conducteur (53) qui est monté sur glissières et/ou sur rouleaux sur l'élément porteur (3), et l'élément d'amortissement (5) étant monté fixement sur le deuxième côté (52) sur l'élément de support (4).

6. Dispositif (1) selon l'une des revendications 4 ou 5, ledit le guide (30, 40) se présente sous forme d'un disque excentrique (32, 41) disposé de manière excentré par rapport à l'axe de rotation (22).

7. Dispositif (1) selon l'une des revendications 4 à 6, ledit le guide (30, 40) se présente sous forme d'une courbe de guide, de préférence d'une rainure de guide (33, 42), s'étendant essentiellement dans le sens de la circonférence (23), ledit la courbe de guide ayant, dans le sens de la circonférence (23), par rapport à l'axe de rotation (22), au moins dans la section angulaire (54) prédéfinie, ledit un rayon de guide variant en continu, le rayon de guide variant de préférence dans la section de périmètre (23) d'une valeur de base à une valeur d'excentrique différente et revient à la valeur de base, ledit de préférence, la section angulaire (54) prédéterminée s'étend essentiellement sur toute la périphérie (23).

8. Dispositif (1) selon l'une des revendications 4 à 7, ledit le palier fixe montre un réceptacle de l'élément amortisseur (35, 45), l'élément d'amortissement (5) pouvant être fixé par un côté (51, 52) dans le réceptacle de l'élément amortisseur (35, 45), le réceptacle de l'élément amortisseur (34, 45) montre de préférence un guide d'entraînement (46) pour guider, de préférence pour guider radialement, un élément d'entraînement (53) de l'autre côté (52, 51) de l'élément d'amortissement (5).

9. Dispositif (1) selon la revendication précédente, ledit l'élément porteur (3) montre un réceptacle de l'élément amortisseur (35), ledit le réceptacle de l'élément amortisseur (35) étant de préférence fixé à un axe fixe (20) de l'élément porteur (3).

10. Dispositif (1) selon la revendication 8, ledit l'élément de support (4) montre la réception d'élément d'amortissement (45), ledit l'élément de support (4) se présente de préférence sous forme d'une jante (24) de l'élément rotatif (10), de préférence de la roue (2), ledit le réceptacle de l'élément amortisseur (45) est de préférence intégré dans un rayon de la jante (24).

11. Dispositif (1) selon l'une des revendications 1 à 3, **caractérisé en ce que** la première extrémité (51) de l'élément amortissement (5) est montée de façon fixe ou rotatif sur l'élément porteur (3), ledit l'élément porteur (3) étant configuré pour être fixé à l'axe (20) ou au cadre porteur (110), et la deuxième extrémité (52) de l'élément d'amortissement (5) est montée de façon rotatif à l'élément de support (4), ledit l'élément de support (4) étant conçu pour être fixé à l'élément de rotation (10) à distance de l'axe de rotation (22).

12. Dispositif (1) selon l'une des revendications précédentes, ledit l'élément d'amortissement (5) montre un réceptacle (57) rempli d'un médium de remplissage et un corps actif (59) disposé de manière déplaçable dans le réceptacle (57) pour interagir avec le médium de remplissage, ledit le corps actif (59) étant relié à un corps de transmission de force (58) pour transmettre une force extérieure au corps actif (59).

13. Dispositif (1) selon l'une des revendications précédentes, comprenant en outre une unité de réglage (8) qui est conçue pour régler la taille résultante de la variation de longueur de l'élément d'amortissement (5) générée par une rotation de l'élément de support (4) autour de l'axe de rotation (22) dans la section d'angle (54) prédéterminée, pour régler une constante d'amortissement de l'élément d'amortissement (5), et/ou pour désactiver et/ou découpler l'élément d'amortissement (5).

14. Dispositif (1) selon l'une des revendications précédentes, comprenant en outre un frein d'arrêt pour l'élément rotatif (10), conçu de telle sorte que lorsqu'une valeur limite prédéfinie d'une force d'amortissement générée par l'élément amortisseur (5) est atteinte, le frein d'arrêt est activé, ledit le frein d'arrêt étant conçu de préférence de telle sorte que l'élément rotatif (10) subit un freinage continu jusqu'à l'arrêt, ledit une valeur de la force de freinage agissant sur l'élément rotatif (10) par le frein d'arrêt étant de préférence prédéfinie et/ou réglable.

15. Dispositif roulant (100), de préférence déambulateur, véhicule pédestre, poussette, fauteuil roulant, chariot de marche, vélo de course ou appareil de jeu, remorque de vélo, brouette, en particulier brouette pour la construction, chariot de service, en particulier pour avion, train ou bateau, ou chariot à bagages, comprenant un cadre porteur (110) et une pluralité de roues (2, 9) disposées de manière rotative sur le cadre porteur (110),
**caractérisé en ce que**
au moins un dispositif (1) selon l'une des revendications précédentes pour freiner une roue (2, 9) de la pluralité de roues (2, 9) est disposé entre la roue (2, 9) à freiner et le cadre porteur (110).
